# EUROPEAN PATENT APPLICATION

(11) **EP 4 593 509 A1**
(43) Date of publication of application: **30.07.2025**
(21) Application number: 23862254.2
(22) Date of filing: 31.08.2023
(51) Int. Cl.: H04W 74/08

(54) **METHOD AND APPARATUS USED IN COMMUNICATION NODE FOR WIRELESS COMMUNICATION**

(30) Priority: 07.09.2022 CN 202211090094; 09.09.2022 CN 202211105175
(71) Applicant: SHANGHAI LANGBO COMMUNICATION TECHNOLOGY COMPANY LIMITED, Shanghai 200240 (CN)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/115994
(87) International publication number: WO 2024/051560

(57) **Abstract**

Disclosed in the present application is a method and an apparatus used in a wireless communication node. The communication node, during a first random access process, sends a preamble according to a first random access resource group; in response to sending the preamble according to the first random access resource group, receives a first MAC subPDU, wherein the first MAC subPDU indicates a first backoff parameter value; and in response to the first random access process not being completed, selects a second random access resource group, and sends the preamble according to the second random access resource group; wherein whether the execution time of the action of selecting the second random access resource group depends on the first backoff parameter value is related to the second random access resource group; the first random access resource group and the second random access resource group are both assigned to 4-step random access. The present application provides a random access backoff mechanism that self-adaptively adjusts the execution time of the performance of the random access resource selection process for uplink coverage enhancement of PRACH.

## Description

### Technical Field

The present application relates to a transmission method and an apparatus in wireless communication systems, in particular, to a transmission method and an apparatus for coverage enhancement.

### Background Art

Coverage is one of the key factors that operators consider when commercializing cellular communication networks because it directly affects service quality, capital expenditure (CAPEX) and operating expenses (OPEX). In most of the scenarios actually deployed, uplink (UL) performance may be a bottleneck, while in some emerging vertical use cases, such as video uploading, uplink traffic is large. In the Rel-17 "NR (New Radio) coverage enhancement" work item (WI), the NR coverage for PUSCH (Physical uplink shared channel), PUCCH (Physical uplink control channel) and Msg3 (Message 3) is extended and enhanced. However, PRACH (Physical random access channel) coverage still has not been increased. Because PRACH transmission is very important in many processes, such as initial access and beam failure recovery, Rel-18 established a "Further NR coverage enhancements" work item to further enhance the uplink coverage of PRACH.

### Summary of Invention

In the existing protocol, a random access (RA) backoff mechanism based on backoff time is used to solve the cell overload issue. If a user equipment (UE) receives one backoff indicator (BI) during a random access process and PREAMBLE_BACKOFF is set as the product of one backoff parameter value determined by table lookup, and one backoff factor (SCALING_FACTOR_BI) configured by RRC (Radio Resource Control) message; if the random access process is not completed, according to one backoff time determined according to PREAMBLE_BACKOFF, the random access resource selection process is only performed after this backoff time. While solving the cell overload issue, the random access backoff mechanism increases the latency of the current random access process.

Performing PRACH repetition during random access is an effective means to enhance the uplink coverage of PRACH. Since PRACH repetition leads to an increase in the time-frequency resources occupied by one PRACH attempt, when a large number of user equipment initiate random access, the overload condition of the cell and the random access resource configuration for PRACH repetition change compared to a traditional network, which makes it difficult for the existing random access backoff mechanism based on backoff time to solve the cell load balancing issue of PRACH repetition. Therefore, the random access backoff mechanism needs to be enhanced to address the cell load balancing issue of PRACH repetition.

In response to the issues described above, the present application provides a solution for random access. In the description of the issue described above, using an NR system as an example; the present application is similarly applicable to scenarios such as LTE (Long Term Evolution) systems; further, although the present application is originally intended for a Uu air interface, the present application may also be used for a PC5 interface. Further, although the present application is originally intended for terminal and base station scenarios, the present application is similarly applicable to V2X (Vehicle-to-Everything) scenarios, communication scenarios between terminal and relay, and between relay and base station to achieve similar technical effects in terminal and base station scenarios. Further, although the present application is originally intended for terminal and base station scenarios, the present application is similarly applicable to IAB (Integrated Access and Backhaul) communication scenarios, so as to achieve similar technical effects in terminal and base station scenarios. Further, although the present application is originally intended for terrestrial network (TN) scenarios, the present application is similarly applicable to non-terrestrial network (NTN) communication scenarios, so as to achieve similar technical effects in TN scenarios. In addition, the use of unified solutions across different scenarios is also helpful to reducing hardware complexity and costs.

As one embodiment, the terminology in the present application is interpreted with reference to the definitions in the 3GPP (3rd Generation Partnership Project) TS36 series-specification protocol.

As one embodiment, the terminology in the present application is interpreted with reference to the definitions in the 3GPP TS38 series-specification protocol.

As one embodiment, the terminology in the present application is interpreted with reference to the definitions in the 3GPP TS37 series-specification protocol.

As one embodiment, the terminology in the present application is interpreted with reference to the definitions in the IEEE (Institute of Electrical and Electronics Engineers) specification protocol.

It should be noted that, embodiments of any of the nodes of the present application and the features in the embodiments may be applied to any other node without conflict. The embodiments of the present application and the features in the embodiments may be arbitrarily combined with one another without conflict.

Disclosed in the present application is a method used in a first node for wireless communication, characterized in that, the method comprises:
during a first random access process, sending a preamble according to a first random access resource group;
in response to sending the preamble according to the first random access resource group, receiving a first MAC (Medium Access Control) subPDU, wherein the first MAC subPDU indicates a first backoff parameter value;
and in response to the first random access process not being completed, selecting a second random access resource group, and sending the preamble according to the second random access resource group;
wherein whether the execution time of the action of selecting the second random access resource group depends on the first backoff parameter value is related to the second random access resource group; the first random access resource group and the second random access resource group are both assigned to 4-step random access (4-step RA).
during a first random access process, sending a preamble according to a first random access resource group.
in response to sending the preamble according to the first random access resource group, receiving a first MAC subPDU, wherein the first MAC subPDU indicates a first backoff parameter value;
and in response to the first random access process not being completed, selecting a second random access resource group, and sending the preamble according to the second random access resource group;
wherein whether the execution time of the action of selecting the second random access resource group depends on the first backoff parameter value is related to the second random access resource group; the first random access resource group and the second random access resource group are both assigned to 2-step random access (2-step RA).

As one embodiment, an issue to be addressed by the present application includes: how to solve the cell overload issue of PRACH repetition.

As one embodiment, an issue to be addressed by the present application includes: how to shorten random access latency.

As one embodiment, an issue to be addressed by the present application includes: how to determine the execution time for selecting the second random access resource group.

As one embodiment, a characteristic of the method described above includes: whether the execution time of the action of selecting the second random access resource group depends on the first backoff parameter value is related to the second random access resource group.

As one embodiment, a characteristic of the method described above includes: the execution time of the action of selecting the second random access resource group depends on the first backoff parameter value, or the execution time of the action of selecting the second random access resource group does not depend on the first backoff parameter value.

As one embodiment, an advantage of the method described above includes: avoiding the action of selecting the second random access resource group only being performed after one backoff time, thus shortening random access latency.

As one embodiment, an advantage of the method described above includes: when the execution time of the action of selecting the second random access resource group does not depend on the first backoff parameter value, the action of selecting the second random access resource group does not need to wait for one backoff time, thus shortening random access latency.

As one embodiment, an advantage of the method described above includes: self-adaptively adjusting the execution time of the action of selecting the second random access resource group, thus solving the cell overload issue of PRACH repetition while shortening random access latency.

According to one aspect of the present application, characterized in that, the method comprises:
in response to the first random access process not being completed, performing initialization of variables before the action of selecting the second random access resource group;
wherein the execution time of the action of selecting the second random access resource group does not depend on the first backoff parameter value.

According to one aspect of the present application, characterized in that, closely following the first random access process not being completed, the second random access resource group is selected; the execution time of the action of selecting the second random access resource group does not depend on the first backoff parameter value.

According to one aspect of the present application, characterized in that, the method comprises:
in response to the first random access process not being completed, determining a first backoff time before the action of selecting the second random access resource group;
wherein the execution time of the action of selecting the second random access resource group depends on the first backoff time; the first backoff time depends on the first backoff parameter value.

According to one aspect of the present application, characterized in that, the first random access resource group consists of K1 air interface resources and the second random access resource group consists of K2 air interface resources; the K1 is a positive integer and the K2 is an integer greater than 1.

According to one aspect of the present application, characterized in that, "whether the execution time of the action of selecting the second random access resource group depends on the first backoff parameter value is related to the second random access resource group" comprises: the execution time of the action of selecting the second random access resource group not depending on the first backoff parameter value and K1 being greater than a first threshold and K2 being greater than the first threshold; or the execution time of the action of selecting the second random access resource group depending on the first backoff parameter value and K1 being smaller than a first threshold and K2 being smaller than the first threshold.

According to one aspect of the present application, characterized in that, "whether the execution time of the action of selecting the second random access resource group depends on the first backoff parameter value is related to the second random access resource group" comprises: the execution time of the action of selecting the second random access resource group depending on the first backoff parameter value and the second random access resource group belonging to a first random access resource set; or the execution time of the action of selecting the second random access resource group not depending on the first backoff parameter value and the second random access resource group not belonging to the first random access resource set.

According to one aspect of the present application, characterized in that, "whether the execution time of the action of selecting the second random access resource group depends on the first backoff parameter value is related to the second random access resource group" comprises: the execution time of the action of selecting the second random access resource group not depending on the first backoff parameter value and a first counter reaching a first value; or the execution time of the action of selecting the second random access resource group depending on the first backoff parameter value and a first counter not reaching the first value; the first counter being used to determine the number of sendings of the preamble.

According to one aspect of the present application, characterized in that, the method comprises:
in response to the first random access process not being completed, determining whether the execution time of a first random access resource selection process is determined depending on the first backoff parameter value according to whether a first condition set is satisfied;
wherein during the first random access resource selection process, the second random access resource group is selected; if the first condition set is satisfied, the execution time of the first random access resource selection process is determined without depending on the first backoff parameter value; if the first condition set is not satisfied, the execution time of the first random access resource selection process is determined depending on the first backoff parameter value.

Disclosed in the present application is a method used in a second node for wireless communication, characterized in that, the method comprises:
during a first random access process, receiving a preamble sent according to a first random access resource group;
in response to receiving the preamble sent by the first random access resource group, sending a first MAC subPDU, wherein the first MAC subPDU indicates a first backoff parameter value;
receiving the preamble sent according to a second random access resource group;
wherein in response to the first random access process not being completed, the second random access resource group is selected; whether the execution time of the selection of the second random access resource group depends on the first backoff parameter value is related to the second random access resource group; the first random access resource group and the second random access resource group are both assigned to 4-step random access.

According to one aspect of the present application, characterized in that, in response to the first random access process not being completed, initialization of variables is performed before the second random access resource group is selected; wherein the execution time of the selection of the second random access resource group does not depend on the first backoff time.

According to one aspect of the present application, characterized in that, closely following the first random access process not being completed, the second random access resource group is selected; the execution time of the selection of the second random access resource group does not depend on the first backoff time.

According to one aspect of the present application, characterized in that, in response to the first random access process not being completed, the first backoff time is determined before the second random access resource group is selected; wherein the execution time of the selection of the second random access resource group depends on the first backoff time; the first backoff time depends on the first backoff parameter value.

According to one aspect of the present application, characterized in that, the first random access resource group consists of K1 air interface resources and the second random access resource group consists of K2 air interface resources; the K1 is a positive integer and the K2 is an integer greater than 1.

According to one aspect of the present application, characterized in that, "whether the execution time of the action of selecting the second random access resource group depends on the first backoff parameter value is related to the second random access resource group" comprises: the execution time of the action of selecting the second random access resource group not depending on the first backoff parameter value and K1 being greater than a first threshold and K2 being greater than the first threshold; or the execution time of the action of selecting the second random access resource group depending on the first backoff parameter value and K1 being smaller than a first threshold and K2 being smaller than the first threshold.

According to one aspect of the present application, characterized in that, "whether the execution time of the action of selecting the second random access resource group depends on the first backoff parameter value is related to the second random access resource group" comprises: the execution time of the action of selecting the second random access resource group depending on the first backoff parameter value and the second random access resource group belonging to a first random access resource set; or the execution time of the action of selecting the second random access resource group not depending on the first backoff parameter value and the second random access resource group not belonging to the first random access resource set.

According to one aspect of the present application, characterized in that, "whether the execution time of the action of selecting the second random access resource group depends on the first backoff parameter value is related to the second random access resource group" comprises: the execution time of the action of selecting the second random access resource group not depending on the first backoff parameter value and a first counter reaching a first value; or the execution time of the action of selecting the second random access resource group depending on the first backoff parameter value and a first counter not reaching the first value; the first counter being used to determine the number of sendings of the preamble.

According to one aspect of the present application, characterized in that, in response to the first random access process not being completed, whether a first condition set is satisfied is used to determine whether the execution time of a first random access resource selection process depends on the first backoff parameter value; wherein during the first random access resource selection process, the second random access resource group is selected; if the first condition set is satisfied, the execution time of the first random access resource selection process does not depend on the first backoff parameter value; if the first condition set is not satisfied, the execution time of the first random access resource selection process depends on the first backoff parameter value.

Disclosed in the present application is a first node for wireless communication, characterized in that, the node comprises:
during a first random access process, sending a preamble according to a first random access resource group; in response to sending the preamble according to the first random access resource group, receiving a first MAC subPDU, wherein the first MAC subPDU indicates a first backoff parameter value; and in response to the first random access process not being completed, selecting a second random access resource group, and sending the preamble according to the second random access resource group;
wherein whether the execution time of the action of selecting the second random access resource group depends on the first backoff parameter value is related to the second random access resource group; the first random access resource group and the second random access resource group are both assigned to 4-step random access.

Disclosed in the present application is a second node for wireless communication, characterized in that, the node comprises:
a second receiver, during a first random access process, receiving a preamble sent according to a first random access resource group;
a second transmitter, in response to receiving the preamble sent by the first random access resource group, sending a first MAC subPDU, wherein the first MAC subPDU indicates a first backoff parameter value;
the second receiver receiving the preamble sent according to a second random access resource group;
wherein in response to the first random access process not being completed, the second random access resource group is selected; whether the execution time of the selection of the second random access resource group depends on the first backoff parameter value is related to the second random access resource group; the first random access resource group and the second random access resource group are both assigned to 4-step random access.

As one embodiment, the present application designed a random access backoff mechanism suitable for PRACH repetition that has the following advantages over a conventional scheme:
- . avoids cell overload;
- . adjusts the load state of the cell;
- . shortens random access latency;
- . solves the cell overload issue of PRACH repetition while shortening random access latency;
- . when the random access process is not completed, self-adaptively adjusts the execution time of the performance of the random access resource selection process.

### Description of Accompanying Drawings

Other features, objectives, and advantages of the present application will become more apparent by reading the detailed description of the non-limiting embodiments with reference to the following accompanying drawings:
FIG. 1 shows a flow chart of the transmission of a preamble and a first MAC subPDU according to one embodiment of the present application;
FIG. 2 shows a schematic diagram of a network architecture according to one embodiment of the present application;
FIG. 3 shows a schematic diagram of a wireless protocol architecture for a user plane and a control plane, according to one embodiment of the present application;
FIG. 4 shows a schematic diagram of a first communication equipment and a second communication equipment according to one embodiment of the present application;
FIG. 5 shows a wireless signal transmission flow chart according to one embodiment of the present application;
FIG. 6 shows a wireless signal transmission flow chart according to another embodiment of the present application;
FIG. 7 shows a flow chart of the execution time of the selection of a second random access resource group not depending on a first backoff parameter value, according to one embodiment of the present application;
FIG. 8 shows a flow chart of the execution time of the selection of a second random access resource group not depending on a first backoff parameter value, according to another embodiment of the present application;
FIG. 9 shows a flow chart of the execution time of the selection of a second random access resource group depending on a first backoff parameter value, according to one embodiment of the present application;
FIG. 10 shows a schematic diagram of whether the execution time of the selection of a second random access resource group depends on a first backoff parameter value is related to the second random access resource group, according to one embodiment of the present application;
FIG. 11 shows a schematic diagram of whether the execution time of the selection of a second random access resource group depends on a first backoff parameter value is related to the second random access resource group, according to another embodiment of the present application;
FIG. 12 shows a schematic diagram of whether the execution time of the selection of a second random access resource group depends on a first backoff parameter value is related to the second random access resource group, according to yet another embodiment of the present application;
FIG. 13 shows a structural block diagram of a processing apparatus for use in a first node, according to one embodiment of the present application;
FIG. 14 shows a structural block diagram of a processing apparatus for use in a second node, according to one embodiment of the present application.

### Specific Embodiments

The technical solutions of the present application will be described in further detail below in conjunction with the accompanying drawings, and it is to be noted that the embodiments in the present application and the features in the embodiments may be arbitrarily combined with each other without conflict.

### Embodiment 1

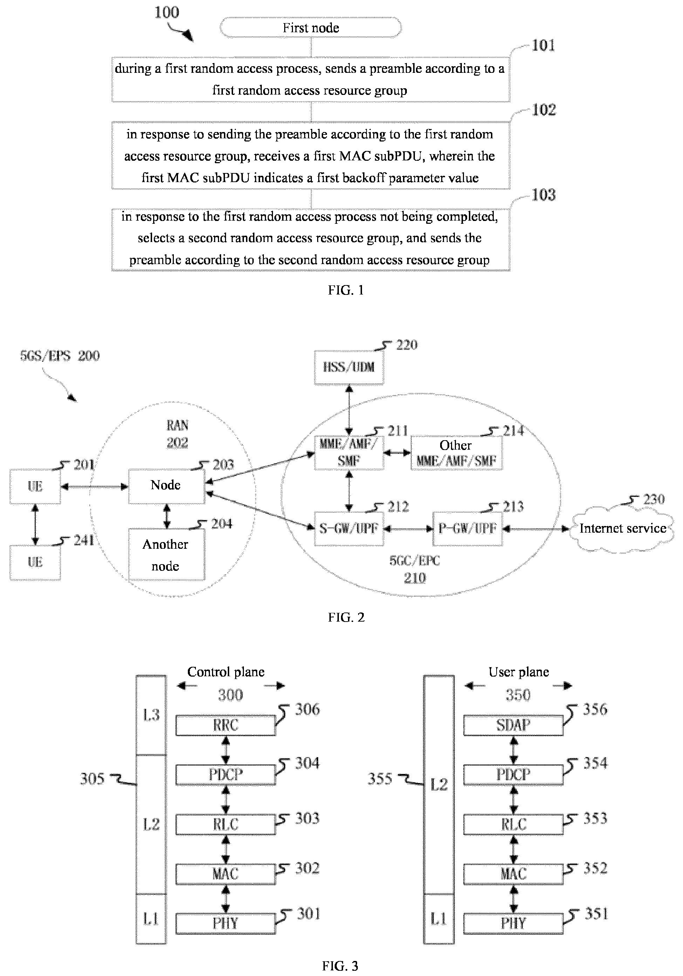

Embodiment 1 exemplifies a flow chart of the transmission of a preamble and a first MAC subPDU according to one embodiment of the present application, as shown in FIG. 1. In FIG. 1, each box represents one step, and it should be particularly emphasized that the sequence of the various boxes in the figure does not represent the temporal relation between the indicated steps.

In Embodiment 1, the first node in the present application, in Step 101, during a first random access process, sends a preamble according to a first random access resource group; in Step 102, in response to sending the preamble according to the first random access resource group, receives a first MAC subPDU, wherein the first MAC subPDU indicates a first backoff parameter value; in Step 103, in response to the first random access process not being completed, selects a second random access resource group, and sends the preamble according to the second random access resource group; wherein whether the execution time of the action of selecting the second random access resource group depends on the first backoff parameter value is related to the second random access resource group.

As one embodiment, the first random access resource group is used to send the preamble.

As one embodiment, the first random access resource group is used for one PRACH attempt.

As one embodiment, the second random access resource group is used to send the preamble.

As one embodiment, the second random access resource group is used for one PRACH attempt.

As one embodiment, the first random access resource group and the second random access resource group are both assigned to 4-step random access.

As one sub-embodiment of this embodiment, during the initialization of the first random access process, the type of the first random access process is set to 4-step random access.

As one sub-embodiment of this embodiment, during the initialization of the first random access process, RA_TYPE is set to 4-step RA.

As one sub-embodiment of this embodiment, 4-step random access is indicated according to the preamble sent by the first random access resource group.

As one sub-embodiment of this embodiment, 4-step random access is indicated according to the preamble sent by the second random access resource group.

As one sub-embodiment of this embodiment, any preamble sent over any air interface resource in the K1 air interface resources in the present application indicates 4-step random access.

As one sub-embodiment of this embodiment, any air interface resource in the K1 air interface resources in the present application is configured for 4-step random access.

As one sub-embodiment of this embodiment, any preamble sent over any air interface resource in the K2 air interface resources in the present application indicates 4-step random access.

As one sub-embodiment of this embodiment, any air interface resource in the K2 air interface resources in the present application is configured for 4-step random access.

As one sub-embodiment of this embodiment, the first random access resource set is configured for 4-step random access.

As one sub-embodiment of this embodiment, the second random access resource set is configured for 4-step random access.

As one embodiment, the first random access resource group and the second random access resource group are both assigned to 2-step random access.

As one sub-embodiment of this embodiment, during the initialization of the first random access process, the type of the first random access process is set to 2-step random access.

As one sub-embodiment of this embodiment, during the initialization of the first random access process, RA_TYPE is set to 2-step RA.

As one sub-embodiment of this embodiment, 2-step random access is indicated according to the preamble sent by the first random access resource group.

As one sub-embodiment of this embodiment, 2-step random access is indicated according to the preamble sent by the second random access resource group.

As one sub-embodiment of this embodiment, any preamble sent over one air interface resource in the first random access resource group indicates 2-step random access.

As one sub-embodiment of this embodiment, any preamble sent over any air interface resource in the K1 air interface resources in the present application indicates 2-step random access.

As one sub-embodiment of this embodiment, any air interface resource in the K1 air interface resources in the present application is configured for 2-step random access.

As one sub-embodiment of this embodiment, any preamble sent over any air interface resource in the K2 air interface resources in the present application indicates 2-step random access.

As one sub-embodiment of this embodiment, any air interface resource in the K2 air interface resources in the present application is configured for 2-step random access.

As one sub-embodiment of this embodiment, the first random access resource set is configured for 2-step random access.

As one sub-embodiment of this embodiment, the second random access resource set is configured for 2-step random access.

Typically, the first random access resource group and the second random access resource group are both assigned to 4-step random access.

As one embodiment, the random access resource set to which the first random access resource group belongs is the first random access resource set, and the random access resource set to which the second random access resource group belongs is the first random access resource set.

As one embodiment, the random access resource set to which the first random access resource group belongs is the first random access resource set, and the random access resource set to which the second random access resource group belongs is the second random access resource set.

As one embodiment, the first random access resource group belongs to the first random access resource set.

As one embodiment, during the initialization of the first random access process, the first random access resource set is selected.

As one embodiment, in response to the first random access process not being completed, the second random access resource group is selected in the first random access resource set.

As one embodiment, in response to the first random access process not being completed, the second random access resource group is selected in the second random access resource set.

As one embodiment, the first random access resource group and the second random access resource group are configured to the first cell.

As one embodiment, the first random access resource group and the second random access resource group are configured to the same uplink (UL) carrier of the first cell.

As one embodiment, the first random access resource group and the second random access resource group are configured to the same UL BWP (Bandwidth Part) of the first cell.

As one embodiment, the first random access resource group is not configured for PRACH repetition and the second random access resource group is configured for PRACH repetition.

As one embodiment, the first random access resource group is configured for PRACH repetition and the second random access resource group is configured for PRACH repetition.

As one embodiment, the first random access resource group is associated with the same SSB (Synchronization Signal Block).

As one embodiment, the first random access resource group is associated with at least one SSB.

As one embodiment, the first random access resource group is associated with a plurality of SSBs.

As one embodiment, the second random access resource group is associated with the same SSB.

As one embodiment, the second random access resource group is associated with at least one SSB.

As one embodiment, the second random access resource group is associated with a plurality of SSBs.

As one embodiment, the first random access resource group comprises at least one preamble.

As one embodiment, the first random access resource group comprises at least one PRACH occasion.

As one embodiment, the first random access resource group comprises at least one air interface resource.

As one embodiment, the first random access resource group comprises at least one uplink carrier.

As one embodiment, the first random access resource group comprises at least one subcarrier.

As one embodiment, the first random access resource group comprises at least one UL BWP.

As one embodiment, the first random access resource group comprises at least one RE (Resource Element).

As one embodiment, the first random access resource group comprises at least one PRB (Physical Resource Block).

As one embodiment, the first random access resource group comprises at least one slot.

As one embodiment, the first random access resource group comprises at least one symbol.

As one embodiment, the first random access resource group comprises at least one SSB.

As one embodiment, the first random access resource group comprises at least one CSI-RS (Channel State Information RS).

As one embodiment, the second random access resource group comprises at least one preamble.

As an embodiment, the second random access resource group comprises at least one PRACH occasion.

As one embodiment, the second random access resource group comprises at least one air interface resource.

As one embodiment, the second random access resource group comprises at least one uplink carrier.

As one embodiment, the second random access resource group comprises at least one subcarrier.

As one embodiment, the second random access resource group comprises at least one UL BWP.

As one embodiment, the second random access resource group comprises at least one RE.

As one embodiment, the second random access resource group comprises at least one PRB.

As one embodiment, the second random access resource group comprises at least one slot.

As one embodiment, the second random access resource group comprises at least one symbol.

As one embodiment, the second random access resource group comprises at least one SSB.

As one embodiment, the second random access resource group comprises at least one CSI-RS.

As one embodiment, within the time interval from sending the preamble according to the first random access resource group to sending the preamble according to the second random access resource group, any preamble belonging to the first random access process other than the preamble sent by the first random access resource group and the preamble according to the second random access resource group is not sent.

As one embodiment, within the time interval from sending the preamble according to the first random access resource group to selecting the second random access resource group, any random access resource group belonging to the first random access process is not selected.

As one embodiment, within the time interval from sending the preamble according to the first random access resource group to sending the preamble according to the second random access resource group, only one random access resource selection process is performed.

As one embodiment, within the time interval from sending the preamble according to the first random access resource group to sending the preamble according to the second random access resource group, the PREAMBLE_POWER_RAMPING_COUNTER for the first random access process is only incremented by 1.

As one embodiment, within the time interval from sending the preamble according to the first random access resource group to sending the preamble according to the second random access resource group, the PREAMBLE_POWER_RAMPING_COUNTER for the first random access process is incremented by the K1.

As one embodiment, within the time interval from sending the preamble according to the first random access resource group to sending the preamble according to the second random access resource group, the PREAMBLE_TRANSMISSION_COUNTER for the first random access process is incremented by the K1.

As one embodiment, within the time interval from sending the preamble according to the first random access resource group to sending the preamble according to the second random access resource group, the PREAMBLE_POWER_RAMPING_COUNTER for the first random access process is incremented by a positive integer not greater than the K1.

As one embodiment, within the time interval from sending the preamble according to the first random access resource group to sending the preamble according to the second random access resource group, the PREAMBLE_TRANSMISSION_COUNTER for the first random access process is incremented by a positive integer not greater than the K1.

As one embodiment, the first random access resource group is selected before the action of sending the preamble according to the first random access resource group.

As one embodiment, the action of sending the preamble according to the first random access resource group comprises: sending the preamble over the K1 air interface resources comprised in the first random access resource group.

As one embodiment, the action of sending the preamble according to the first random access resource group comprises: sending the preamble according to a PRACH occasion associated with the first random access resource group.

As one embodiment, the action of sending the preamble according to the first random access resource group comprises: sending the preamble according to PREAMBLE_INDEX determined according to the first random access resource group.

As one embodiment, the action of sending the preamble according to the first random access resource group comprises: sending the preamble according to PREAMBLE_RECEIVED_TARGET_POWER determined according to the first random access resource group.

As one embodiment, the first random access process is initiated in the RRC_CONNECTED state.

As one embodiment, the first random access process is initiated in the RRC_INACTIVE state.

As one embodiment, the first random access process is initiated in the RRC_IDLE state.

As one embodiment, the first random access process is triggered by a MAC sublayer.

As one embodiment, the first random access process is triggered by an RRC sublayer.

As one embodiment, the first random access process is triggered by a PDCCH (Physical Downlink Control Channel) order.

As one embodiment, the first random access process is used for initial access.

As one embodiment, the first random access process is used to recover RRC connection from the RRC_INACTIVE state.

As one embodiment, the first random access process is used for BFR (Beam Failure Recovery).

As one embodiment, the first random access process is used for SDT (Small Data Transmission).

As one embodiment, the first random access process is a 4-step random access process.

As one embodiment, the first random access process is a contention based random access (CBRA) process.

As one embodiment, the first random access process is performed on a first cell.

As one embodiment, the first random access process is performed on a MAC entity for the cell group to which the first cell belongs.

As one embodiment, the first cell is a SpCell (Special Cell).

As one embodiment, the first cell is a PCell (Primary Cell).

As one embodiment, the first cell is a PSCell (Primary SCG (Secondary Cell Group)).

As one embodiment, the first random access resource group is used for PRACH repetition.

As one embodiment, the first random access resource group is not used for PRACH repetition.

As one embodiment, the "sending a preamble according to a first random access resource group" comprises: sending at least one preamble according to the first random access resource group.

As one embodiment, the "sending a preamble according to a first random access resource group" comprises: sending only one preamble according to the first random access resource group.

As one embodiment, the "sending a preamble according to a first random access resource group" comprises: sending a plurality of preambles according to the first random access resource group.

As one embodiment, in response to sending at least one preamble, a first random access response is received, and the first random access response comprises at least the first MAC subPDU.

As one sub-embodiment of this embodiment, the first random access response is one MAC PDU.

As one sub-embodiment of this embodiment, the first random access response comprises only the first MAC subPDU.

As one sub-embodiment of this embodiment, the first random access response comprises the first MAC subPDU and at least one MAC subPDU.

As one embodiment, the first MAC subPDU is a response to the preamble sent according to the first random access resource group.

As one embodiment, the first MAC subPDU is one MAC subPDU.

As one embodiment, the first MAC subPDU is one MAC subheader.

As one embodiment, the first MAC subPDU does not comprise a RAPID (Random Access Preamble ID) field.

As one embodiment, the first MAC subPDU is used to determine the first backoff parameter value.

As one embodiment, the first MAC subPDU comprises one BI field.

As one embodiment, the BI field in the first MAC subPDU is used to indicate the overload condition in the first cell.

As one embodiment, the BI field in the first MAC subPDU indicates the first backoff parameter value.

As one embodiment, the BI field in the first MAC subPDU indicates an index of the first backoff parameter value.

As one embodiment, the BI field in the first MAC subPDU is used to determine the first backoff parameter value.

As one embodiment, the BI field in the first MAC subPDU comprises 4 bits.

As one embodiment, the BI field in the first MAC subPDU comprises 5 bits.

As one embodiment, the first backoff parameter value is determined by table lookup according to the first MAC subPDU.

As one embodiment, the first backoff parameter value is determined by looking up a first backoff table according to the first MAC subPDU, wherein the first backoff table comprises M1 indexes, and M2 indexes in the M1 indexes indicate M2 candidate backoff parameter values.

As one sub-embodiment of this embodiment, each index in the M2 indexes of the M1 indexes corresponds to one candidate backoff parameter value in the M2 candidate backoff parameter values.

As one sub-embodiment of this embodiment, the first backoff table comprises an index of the first backoff parameter value and the first backoff parameter value.

As one sub-embodiment of this embodiment, the first backoff table is dedicated to PRACH repetition.

As one sub-embodiment of this embodiment, the second backoff table is not dedicated to PRACH repetition.

As one sub-embodiment of this embodiment, the first backoff table refers to Table 7.2-1 in Section 7.2 of 3GPP TS 38.321.

As one sub-embodiment of this embodiment, the M1 is greater than the M2.

As one sub-embodiment of this embodiment, the M1 is equal to the M2.

As one sub-embodiment of this embodiment, the M1 is equal to 16, and the M2 is equal to 14.

As one sub-embodiment of this embodiment, the M1 is equal to 16, and the M2 is equal to 15.

As one sub-embodiment of this embodiment, the M1 is equal to 16, and the M2 is equal to 16.

As one embodiment, the first backoff parameter value is in milliseconds.

As one embodiment, the first backoff parameter value is predefined.

As one embodiment, the "in response to the first random access process not being completed" comprises: in response to determining that the first random access process is not complete.

As one embodiment, the "in response to the first random access process not being completed" comprises: at least after determining that the first random access process is not complete.

As one embodiment, the "in response to the first random access process not being completed" comprises: when it is determined that the first random access process is not complete.

As one embodiment, the "the first random access process is not complete" comprises: not considering the first random access process to be completed.

As one embodiment, the "the first random access process is not complete" comprises: considering the first random access process to not be successfully completed.

As one embodiment, the "the first random access process is not complete" comprises: not considering the first random access process to be successfully completed.

As one embodiment, the expiration of at least a first time window is used to determine that the first random access process is not complete; the first MAC subPDU is received in the first time window.

As one embodiment, the first node considers that the random access response is received unsuccessfully; the action "considers that the random access response is received unsuccessfully" is used to determine that the first random access process is not complete.

As one sub-embodiment of this embodiment, the expiration of at least the first time window is used to determine and consider that the random access response is received unsuccessfully.

As one sub-embodiment of this embodiment, if the first time window expires, it is considered that the random access response is received unsuccessfully.

As one sub-embodiment of this embodiment, if the first time window expires, and if the random access response comprising a random access preamble identifier matching the sent PREAMBLE_INDEX is not received when the first time window is running, it is considered that the random access response is received unsuccessfully

As one embodiment, the expiration of at least a first timer is used to determine that the first random access process is not complete.

As one embodiment, at least unsuccessful contention resolution is used to determine that the first random access process is not complete.

As one embodiment, the first node considers that contention resolution is unsuccessful; the "considers that contention resolution is unsuccessful" is used to determine that the first random access process is not complete.

As one sub-embodiment of this embodiment, the expiration of the first timer is use to determine and consider that contention resolution is unsuccessful.

As one sub-embodiment of this embodiment, the first timer is a MAC sublayer timer.

As one sub-embodiment of this embodiment, the first timer is ra-ContentionResolutionTimer.

As one sub-embodiment of this embodiment, if the first timer expires, it is considered that contention resolution is unsuccessful.

As one embodiment, the action of selecting the second random access resource group comprises: performing a first random access resource selection process and during the first random access resource selection process, selecting the second random access resource group.

As one embodiment, the action of selecting the second random access resource group comprises: determining the second random access resource group.

As one embodiment, the action of selecting the second random access resource group comprises: selecting the second random access resource group in the first random access resource set.

As one embodiment, the action of selecting the second random access resource group comprises: selecting the second random access resource group in the second random access resource set.

As one embodiment, the action of selecting the second random access resource group comprises: determining the K2 time-frequency resources in the present application.

As one embodiment, the action of selecting the second random access resource group comprises: determining at least one SSB associated with the second random access resource group.

As one embodiment, the action of selecting the second random access resource group comprises: determining at least one air interface resource associated with the second random access resource group.

As one embodiment, the action of selecting the second random access resource group comprises: determining at least one PRACH occasion associated with the second random access resource group.

As one embodiment, the action of selecting the second random access resource group comprises: determining at least one preamble associated with the second random access resource group.

As one embodiment, the second random access resource group is selected before the action of sending the preamble according to the second random access resource group.

As one embodiment, the action of sending the preamble according to the second random access resource group comprises: sending the preamble over the K1 air interface resources comprised in the second random access resource group.

As one embodiment, the action of sending the preamble according to the second random access resource group comprises: sending the preamble according to a PRACH occasion associated with the second random access resource group.

As one embodiment, the action of sending the preamble according to the second random access resource group comprises: sending the preamble according to PREAMBLE_INDEX determined according to the second random access resource group.

As one embodiment, the action of sending the preamble according to the second random access resource group comprises: sending the preamble according to PREAMBLE_RECEIVED_TARGET_POWER determined according to the second random access resource group.

As one embodiment, the execution time of the action of selecting the second random access resource group refers to: the execution time of the first random access resource selection process.

As one embodiment, the execution time of the action of selecting the second random access resource group refers to: the time at which performance of the first random access resource selection process begins.

As one embodiment, the execution time of the action of selecting the second random access resource group refers to: the time at which the selection of the second random access resource group begins.

As one embodiment, during the initialization process of the first random access process, a first backoff factor is set.

As one embodiment, the action of setting the first backoff factor comprises: setting the first backoff factor to 1.

As one embodiment, the action of setting the first backoff factor comprises: first setting the first backoff factor to 1, then setting the first backoff factor to a first candidate backoff factor.

As one embodiment, the first backoff factor is a variable.

As one embodiment, the first backoff factor is SCALING_FACTOR_BI.

As one embodiment, the name of the first backoff factor comprises SCALING_FACTOR_BI.

As one embodiment, the name of the first backoff factor comprises at least one of SCALING_FACTOR_BI, Msg1 (Message 1), PRACH and Repetition.

As one embodiment, the first candidate backoff factor is one scalingFactorBI.

As one embodiment, the first candidate backoff factor is one scalingFactorBI configured for PRACH repetition.

As one embodiment, the first candidate backoff factor is configurable.

As one embodiment, the first candidate backoff factor is configured.

As one embodiment, the first candidate backoff factor is configured for PRACH repetition.

As one embodiment, at least one candidate of the first candidate backoff factor is greater than 1.

As one embodiment, at least one candidate of the first candidate backoff factor is not greater than 1.

As one embodiment, a candidate for the first candidate backoff factor comprises an integer greater than 1.

As one embodiment, a candidate for the first candidate backoff factor comprises a non-integer greater than 1.

As one embodiment, one candidate of the first candidate backoff factor is 1.

As one embodiment, any candidate of the first candidate backoff factor is not 1.

As one embodiment, each candidate of the first candidate backoff factor is greater than 1.

As one embodiment, each candidate of the first candidate backoff factor is not greater than 1.

As one embodiment, each candidate of the first candidate backoff factor is less than 1.

As one embodiment, the first candidate backoff factor is not configured.

As one embodiment, the first candidate backoff factor is configured.

As one embodiment, the action of setting the first backoff factor comprises: first setting the first backoff factor to 1, then setting the first backoff factor to a second candidate backoff factor.

As one embodiment, the second candidate backoff factor is configurable.

As one embodiment, the second candidate backoff factor is configured by an RRC message.

As one embodiment, any candidate of the second candidate backoff factor is not greater than 1.

As one embodiment, any candidate of the second candidate backoff factor is less than 1.

As one embodiment, the second candidate backoff factor is not configured.

As one embodiment, the second candidate backoff factor is configured.

As one embodiment, the second candidate backoff factor is configured to NSAG (Network Slide AS (Access Stratum) Group).

As one embodiment, the second candidate backoff factor is configured for BFR.

As one embodiment, when the first MAC subPDU is received, the first backoff factor is set to 1.

As one embodiment, when the first MAC subPDU is received, the first backoff factor is set as the first candidate backoff factor.

As one embodiment, when the first MAC subPDU is received, the first backoff factor is set as the second candidate backoff factor.

As one embodiment, in response to the first MAC subPDU being received, a first backoff variable is set.

As one embodiment, the action of setting the first backoff variable comprises: setting the first backoff variable according to at least the first backoff parameter value.

As one embodiment, the action of setting the first backoff variable comprises: setting the first backoff variable according to at least the first backoff parameter value and the first backoff factor.

As one embodiment, the action of setting the first backoff variable comprises: setting the first backoff variable as the product of the first backoff parameter value and the first backoff factor.

As one embodiment, the action of setting the first backoff variable comprises: setting the first backoff variable as the product of the first backoff parameter value and the first backoff factor and a first parameter.

As one embodiment, the name of the first backoff variable comprises PREAMBLE_BACKOFF.

As one embodiment, the name of the first backoff variable comprises at least one of PREAMBLE, BACKOFF, Msg1 (Message 1), PRACH and Repetition.

As one embodiment, the first backoff variable is PREAMBLE_BACKOFF.

As one embodiment, the first parameter is related to the K1.

As one embodiment, the first parameter is related to the K2.

As one embodiment, the first parameter is related to the preamble sent according to the first random access resource group.

As one embodiment, the first parameter is related to the number of repetitions with which the preamble is sent according to the first random access resource group.

As one embodiment, the first parameter is related to the number of SSBs associated with the first random access resource group.

As one embodiment, the first parameter is associated with the number of PRACH occasions associated with the first random access resource group.

As one embodiment, the first parameter is related to the preamble sent according to the second random access resource group.

As one embodiment, the first parameter is related to the number of repetitions with which the preamble is sent according to the second random access resource group.

As one embodiment, the first parameter is related to the number of SSBs associated with the second random access resource group.

As one embodiment, the first parameter is associated with the number of PRACH occasions associated with the second random access resource group.

As one embodiment, the PRACH repetition comprises: Msg1 (Message 1) repetition.

As one embodiment, the PRACH repetition comprises: RACH repetition.

As one embodiment, the PRACH repetition comprises: sending a plurality of PRACHs in one random access attempt.

As one embodiment, the PRACH repetition comprises: sending a plurality of PRACHs between two PREAMBLE_TRANSMISSION_COUNTER updates.

As one embodiment, the PRACH repetition comprises: sending a plurality of PRACHs between two PREAMBLE _POWER_RAMPING_COUNTER updates.

As one embodiment, the PRACH repetition comprises: a plurality of continuous PRACHs.

### Embodiment 2

Embodiment 2 exemplifies a schematic diagram of a network architecture according to one embodiment of the present application, as shown in FIG. 2. FIG. 2 illustrates a network architecture 200 of a 5G NR (New Radio)/LTE (Long-Term Evolution), LTE-A (Long-Term Evolution Advanced) system. The 5G NR/LTE/LTE-A network architecture 200 may be referred to as 5GS (5G System)/EPS (Evolved Packet System) 200 or some other suitable term. The 5GS/EPS 200 comprises at least one of a UE (User Equipment) 201, a RAN (Radio Access Network) 202, a 5GC (5G Core Network)/EPC (Evolved Packet Core) 210, a HSS (Home Subscriber Server)/UDM (Unified Data Management) 220 and an Internet service 230. The 5GS/EPS may be interconnected with other access networks, but these entities/interfaces are not shown for simplicity. As shown in the figure, the 5GS/EPS provides packet exchange services. However, it will be readily understood by those ordinary skill in the art that various concepts presented throughout the present application may be extended to a network or other cellular networks that provide circuit exchange services. The RAN comprises a node 203 and another node 204. The node 203 provides user and control plane protocol termination towards the UE 201. The node 203 may be connected to the another node 204 via an Xn interface (e.g., backhaul)/X2 interface. The node 203 may also be referred to as a base station, a base transceiver station, a radio base station, a radio transceiver, a transceiver function, a basic service set (BSS), an extended service set (ESS), a TRP, or some other suitable term. The node 203 provides access points to the 5GC/EPC 210 for the UE 201. Examples of the UE 201 include cellular phones, smart phones, session initiation protocol (SIP) phones, laptop computers, personal digital assistants (PDA), satellite radios, non-terrestrial base station communications, satellite mobile communications, global positioning systems, multimedia devices, video devices, digital audio players (e.g., MP3 players), cameras, game consoles, unmanned aerial vehicles, aircraft, narrowband Internet of Things devices, machine-type communication devices, land vehicles, automobiles, wearable devices, or any other similar functional devices. Those ordinary skill in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handheld device, a user agent, a mobile client, a client, or some other suitable term. The node 203 is connected to the 5GC/EPC 210 via an S1/NG interface. The 5GC/EPC 210 comprises an MME (Mobility Management Entity)/AMF (Authentication Management Field)/SMF (Session Management Function) 211, other MME/AMF/SMF 214, an S-GW (Service Gateway)/UPF (user plane function) 212, and a P-GW (Packet Data Network Gateway)/UPF 213. The MME/AMF/SMF 211 is a control node that processes signaling between the UE 201 and the 5GC/EPC 210. In general, the MME/AMF/SMF 211 provides bearer and connection management. All user IPs (Internet Protocol) packets are sent via the S-GW/UPF 212, and the S-GW/UPF 212 is itself connected to the P-GW/UPF 213. The P-GW provides UE IP address assignment as well as other functions. The P-GW/UPF 213 is connected to the Internet service 230. The Internet service 230 comprises the operator's corresponding Internet protocol service, which may specifically comprise the Internet, an intranet, an IMS (IP Multimedia Subsystem), and a packet-switched streaming service.

As one embodiment, the UE 201 corresponds to the first node in the present application.

As one embodiment, the UE 201 is a user equipment (UE).

As one embodiment, the UE 201 is a base station equipment (BS).

As one embodiment, the UE 201 is a relay equipment.

As one embodiment, the node 203 corresponds to the second node in the present application.

As one embodiment, the node 203 is a base station equipment.

As one embodiment, the node 203 is a user equipment.

As one embodiment, the node 203 is a relay equipment.

As one embodiment, the node 203 is a gateway.

Typically, the UE 201 is one user equipment and the node 203 is one base station equipment.

As one embodiment, the user equipment supports transmission over a terrestrial network (TN).

As one embodiment, the user equipment supports transmission over a non-terrestrial network (NTN).

As one embodiment, the user equipment supports transmission over a network with large latency differences.

As one embodiment, the user equipment supports dual connection (DC) transmission.

As one embodiment, the user equipment includes an aircraft.

As one embodiment, the user equipment includes an in-vehicle terminal.

As one embodiment, the user equipment includes a vessel.

As one embodiment, the user equipment includes an Internet of Things terminal.

As one embodiment, the user equipment includes a terminal for an Industrial Internet of Things.

As one embodiment, the user equipment includes an equipment that supports low latency, high reliability transmission.

As one embodiment, the user equipment includes a test equipment.

As one embodiment, the user equipment includes a signaling tester.

As one embodiment, the base station equipment includes a base transceiver station (BTS).

As one embodiment, the base station equipment includes a node B (NB).

As one embodiment, the base station equipment includes a gNB.

As one embodiment, the base station equipment includes an eNB.

As one embodiment, the base station equipment includes an ng-eNB.

As one embodiment, the base station equipment includes en-gNB.

As one embodiment, the base station equipment supports transmission over a non-terrestrial network.

As one embodiment, the base station equipment supports transmission over a network with large latency differences.

As one embodiment, the base station equipment supports transmission over a terrestrial network.

As one embodiment, the base station equipment includes a Macrocell base station.

As one embodiment, the base station equipment includes a Microcell base station.

As one embodiment, the base station equipment includes a Picocell base station.

As one embodiment, the base station equipment includes a Femtocell base station.

As one embodiment, the base station equipment includes a base station equipment that supports large latency differences.

As one embodiment, the base station equipment includes an aerial platform equipment.

As one embodiment, the base station equipment includes a satellite equipment.

As one embodiment, the base station equipment includes a TRP (Transmitter Receiver Point).

As one embodiment, the base station equipment includes a CU (Centralized Unit).

As one embodiment, the base station equipment includes a DU (Distributed Unit).

As one embodiment, the base station equipment includes a test equipment.

As one embodiment, the base station equipment includes a signaling tester.

As one embodiment, the base station equipment includes an IAB (Integrated Access and Backhaul)-node.

As one embodiment, the base station equipment includes an IAB-donor.

As one embodiment, the base station equipment includes an IAB-donor-CU.

As one embodiment, the base station equipment includes an IAB-donor-DU.

As one embodiment, the base station equipment includes an IAB-DU.

As one embodiment, the base station equipment includes an IAB-MT.

As one embodiment, the relay equipment includes a relay.

As one embodiment, the relay equipment includes a L3 relay.

As one embodiment, the relay equipment includes a L2 relay.

As one embodiment, the relay equipment includes a router.

As one embodiment, the relay equipment includes a switch.

As one embodiment, the relay equipment includes a user equipment.

As one embodiment, the relay equipment includes a base station equipment.

### Embodiment 3

Embodiment 3 shows a schematic diagram of one wireless protocol architecture for a user plane and a control plane, according to the present application, as shown in FIG. 3. FIG. 3 is a schematic diagram illustrating an embodiment of a radio protocol architecture for the user plane 350 and the control plane 300, and FIG. 3 uses three layers to show the radio protocol architecture used for the control plane 300: Layer 1, Layer 2 and Layer 3. Layer 1 (L1) is the lowest layer and implements various PHY (physical layer) signal processing functions. L1 will be referred to herein as PHY 301. Layer 2 (L2) 305 comprises a MAC (Medium Access Control) sublayer 302, an RLC (Radio Link Control) sublayer 303, and a PDCP (Packet Data Convergence Protocol) sublayer 304 above PHY 301. The PDCP sublayer 304 provides multiplexing between different radio bearers and logical channels. The PDCP sublayer 304 also provides security by encrypting data packets and provides inter-zone movement support. The RLC sublayer 303 provides segmentation and reassembly of upper layer data packets, re-transmission of lost data packets, and re-ordering of data packets to compensate for out-of-sequence reception due to HARQ (Hybrid Automatic Repeat Request). The MAC sublayer 302 provides multiplexing between logical and transmission channels. The MAC sublayer 302 is also responsible for assigning various radio resources (e.g., resource blocks) in one cell. The MAC sublayer 302 is also responsible for HARQ operations. The RRC (Radio Resource Control) sublayer 306 in Layer 3 (L3) in the control plane 300 is responsible for obtaining radio resources (i.e., radio bearers) and configuring the lower layer using RRC signaling. The radio protocol architecture of the user plane 350 comprises Layer 1 (L1) and Layer 2 (L2), the radio protocol architecture of the user plane 350 is generally identical to the corresponding layer and sublayer in the control plane 300 in terms of a physical layer 351, a PDCP sublayer 354 in L2 355, a RLC sublayer 353 in L2 355, and a MAC sublayer 352 in L2 355, but the PDCP sublayer 354 also provides header compression for upper layer data packets to reduce radio transmission overhead. L2 355 in the user plane 350 also comprises an SDAP (Service Data Adaption Protocol) sublayer 356, and the SDAP sublayer 356 is responsible for mapping between a QoS stream and a data radio bearer (DRB) to support the diversity of the service.

As one embodiment, the wireless protocol architecture in FIG. 3 applies to the first node in the present application.

As one embodiment, the wireless protocol architecture in FIG. 3 applies to the second node in the present application.

As one embodiment, any preamble sent according to the first random access resource group in the present application is generated in the PHY 301 or PHY 351.

As one embodiment, any preamble sent according to the second random access resource group in the present application is generated in the PHY 301 or PHY 351.

As one embodiment, the first MAC subPDU in the present application is generated in the MAC 302 or MAC 352.

### Embodiment 4

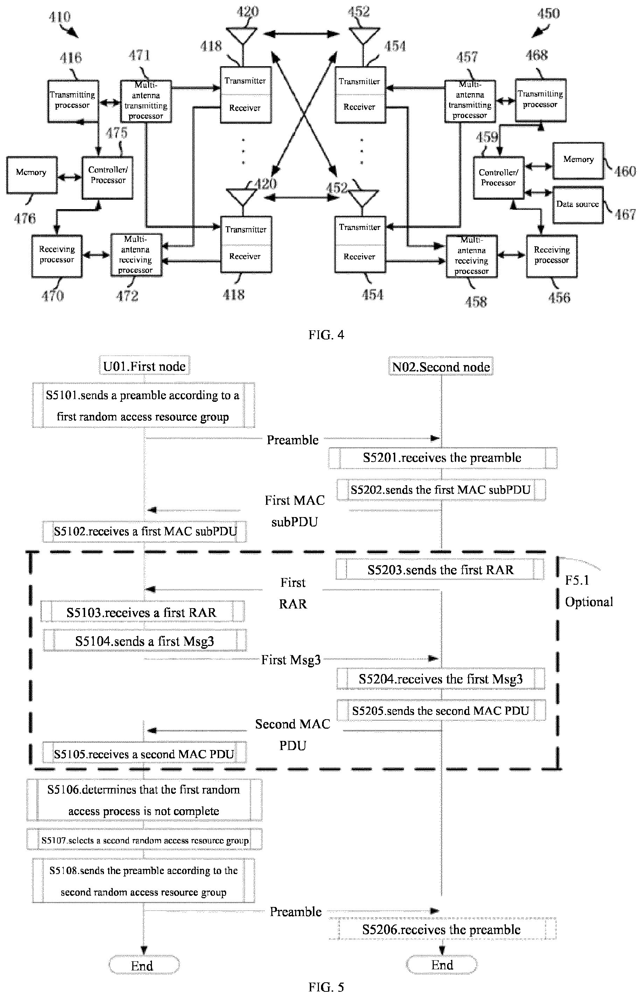

Embodiment 4 shows a schematic diagram of a first communication equipment and a second communication equipment according to the present application, as shown in FIG. 4. FIG. 4 is a block diagram of the first communication equipment 450 and the second communication equipment 410 in communication with each other over an access network.

The first communication equipment 450 comprises a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

The second communication equipment 410 comprises a controller/processor 475, a memory 476, a receiving processor 470, a transmitting processor 416, a multi-antenna receiving processor 472, a multi-antenna transmitting processor 471, a transmitter/receiver 418, and an antenna 420.

In the transmission from the second communication equipment 410 to the first communication equipment 450, at the second communication equipment 410, an upper layer data packet from the core network is provided to the controller/processor 475. The controller/processor 475 implements the functionality of L2. In the transmission from the second communication equipment 410 to the first communication equipment 450, the controller/processor 475 provides header compression, encryption, packet segmentation and re-ordering, multiplexing between logical and transport channels, and radio resource assignment to the first communication equipment 450 based on various priority measures. The controller/processor 475 is also responsible for re-transmission of lost packets and signaling to the first communication equipment 450. The transmitting processor 416 and the multi-antenna transmitting processor 471 implement various signal processing functions for L1 (i.e., the physical layer). The transmitting processor 416 implements coding and interleaving to facilitate forward error correction (FEC) at the second communication equipment 410, and mapping of signal clusters based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 pre-codes coded and modulated symbols in digital space, including codebook-based pre-coding and non-codebook-based pre-coding, and beamforming processing, generating one or a plurality of spatial streams. The transmitting processor 416 then maps each spatial stream to a subcarrier, multiplexes with a reference signal (e.g., pilot) in the time domain and/or frequency domain, and then uses an inverse fast Fourier transform (IFFT) to generate a physical channel of the time domain multi-carrier symbol stream on the carrier. The multi-antenna transmitting processor 471 then sends the analog pre-coding/beamforming operation for the time domain multi-carrier symbol stream. Each transmitter 418 converts the baseband multi-carrier symbol stream provided by the multi-antenna transmitting processor 471 into a radio frequency stream, which is then provided to a different antenna 420.

In the transmission from the second communication equipment 410 to the first communication equipment 450, at the first communication equipment 450, each receiver 454 receives a signal through the respective antenna 452 thereof. Each receiver 454 recovers information that is modulated onto the radio frequency carrier, converts the radio frequency stream into a baseband multi-carrier symbol stream and provides it to the receiving processor 456. The receiving processor 456 and the multi-antenna receiving processor 458 implement various signal processing functions of L1. The multi-antenna receiving processor 458 receives the analog pre-coding/beamforming operation for the baseband multi-carrier symbol stream from the receiver 454. The receiving processor 456 uses fast Fourier transform (FFT) to convert the baseband multi-carrier symbol stream from the time domain to the frequency domain after receiving the analog pre-coding/beamforming operation. In the frequency domain, the physical layer data signal and the reference signal are demultiplexed by the receiving processor 456, wherein the reference signal is used for channel estimation and the data signal recovers any spatial stream destined for the first communication equipment 450 after multi-antenna detection by the multi-antenna receiving processor 458. The symbols on each spatial stream are demodulated and recovered in the receiving processor 456 and generate a soft decision. The receiving processor 456 then decodes and de-interleaves the soft decision to recover upper layer data and control signals transmitted by the second communication equipment 410 over the physical channel. The upper layer data and control signals are then provided to the controller/processor 459. The controller/processor 459 implements the functions of L2. The controller/processor 459 may be associated with the memory 460 storing program code and data. The memory 460 may be referred to as a computer-readable medium. In the transmission from the second communication equipment 410 to the first communication equipment 450, the controller/processor 459 provides demultiplexing between transport and logical channels, packet reassembly, decryption, header decompression, and control signal processing to recover the upper layer data packet from the core network. The upper layer data packet is then provided to all protocol layers above L2. Various control signals may also be provided to L3 for L3 processing.

In the transmission from the first communication equipment 450 to the second communication equipment 410, at the first communication equipment 450, the data source 467 is used to provide an upper layer data packet to the controller/processor 459. The data source 467 represents all protocol layers above L2. Similar to the sending function at the second communication equipment 410 described in the transmission from the second communication equipment 410 to the first communication equipment 450, the controller/processor 459 implements header compression, encryption, packet segmentation and re-ordering based on wireless resource assignment, and multiplexing between logical and transport channels, to implement L2 functions for the user plane and control plane. The controller/processor 459 is also responsible for the re-transmission of lost packets, and signaling to the second communication equipment 410. The transmitting processor 468 performs modulation mapping and channel coding processing, the multi-antenna transmitting processor 457 carries out digital multi-antenna spatial pre-coding, including codebook-based precoding and non-codebook-based pre-coding, and beamforming processing, and then the transmitting processor 468 modulates the generated spatial stream to a multi-carrier/single-carrier symbol stream, which is then sent to a different antenna 452 via the transmitter 454 after the analog pre-coding/beamforming operation by the multi-antenna transmitting processor 457. Each transmitter 454 first converts the baseband symbol stream provided by the multi-antenna transmitting processor 457 into a radio frequency symbol stream and then provides it to the antenna 452.

In the transmission from the first communication equipment 450 to the second communication equipment 410, the function at the second communication equipment 410 is similar to the receiving function at the first communication equipment 450 described in the transmission from the second communication equipment 410 to the first communication equipment 450. Each receiver 418 receives a radio frequency signal through the respective antenna 420, thereof, converts the received radio frequency signal into a baseband signal, and provides the baseband signal to the multi-antenna receiving processor 472 and the receiving processor 470. The receiving processor 470 and the multi-antenna receiving processor 472 collectively implement the functions of L1. The controller/processor 475 implements the functions of L2. The controller/processor 475 may be associated with the memory 476 storing program code and data. The memory 476 may be referred to as a computer-readable medium. In the transmission from the first communication equipment 450 to the second communication equipment 410, the controller/processor 475 provides demultiplexing between transport and logical channels, packet reassembly, decryption, header decompression, and control signal processing to recover the upper layer data packet from the UE 450. The upper layer data packet from the controller/processor 475 may be provided to the core network.

As one embodiment, the first communication equipment 450 comprises: at least one processor and at least one memory, wherein the at least one memory comprises a computer program code; the at least one memory and the computer program code are configured to be used with the at least one processor, and the first communication equipment 450 at least: during a first random access process, sends a preamble according to a first random access resource group; in response to sending the preamble according to the first random access resource group, receives a first MAC subPDU, wherein the first MAC subPDU indicates a first backoff parameter value; and in response to the first random access process not being completed, selects a second random access resource group, and sends the preamble according to the second random access resource group; wherein whether the execution time of the action of selecting the second random access resource group depends on the first backoff parameter value is related to the second random access resource group; the first random access resource group and the second random access resource group are both assigned to 4-step random access.

As one embodiment, the first communication equipment 450 comprises: a memory storing a computer-readable instruction program that when executed by at least one processor generates an action, and the action comprises: during a first random access process, sending a preamble according to a first random access resource group; in response to sending the preamble according to the first random access resource group, receiving a first MAC subPDU, wherein the first MAC subPDU indicates a first backoff parameter value; and in response to the first random access process not being completed, selecting a second random access resource group, and sending the preamble according to the second random access resource group; wherein whether the execution time of the action of selecting the second random access resource group depends on the first backoff parameter value is related to the second random access resource group; the first random access resource group and the second random access resource group are both assigned to 4-step random access.

As one embodiment, the second communication equipment 410 comprises: at least one processor and at least one memory, wherein the at least one memory comprises a computer program code; the at least one memory and the computer program code are configured to be used with the at least one processor. The second communication equipment 410 at least: during the first random access process, sends a preamble according to a first random access resource group; in response to receiving the preamble according to the first random access resource group, sends a first MAC subPDU, wherein the first MAC subPDU indicates a first backoff parameter value; receives the preamble sent according to a second random access resource group; wherein in response to the first random access process not being completed, selects the second random access resource group; whether the execution time of the selection of the second random access resource group depends on the first backoff parameter value is related to the second random access resource group; the first random access resource group and the second random access resource group are both assigned to 4-step random access.

As one embodiment, the second communication equipment 410 comprises: a memory storing a computer-readable instruction program that when executed by at least one processor generates an action, and the action comprises: during the first random access process, sending a preamble according to a first random access resource group; in response to receiving the preamble according to the first random access resource group, sending a first MAC subPDU, wherein the first MAC subPDU indicates a first backoff parameter value; receiving the preamble sent according to a second random access resource group; wherein in response to the first random access process not being completed, selecting the second random access resource group; whether the execution time of the selection of the second random access resource group depends on the first backoff parameter value is related to the second random access resource group; the first random access resource group and the second random access resource group are both assigned to 4-step random access.

As one embodiment, at least one of the antenna 452, the receiver 454, the receiving processor 456, and the controller/processor 459 is used to receive the first MAC subPDU.

As one embodiment, at least one of the antenna 420, the transmitter 418, the transmitting processor 416, and the controller/processor 475 is used to send the first MAC subPDU.

As one embodiment, at least one of the antenna 452, the receiver 454, the receiving processor 456, and the controller/processor 459 is used to receive the second MAC PDU.

As one embodiment, at least one of the antenna 420, the transmitter 418, the transmitting processor 416, and the controller/processor 475 is used to send the second MAC PDU.

As one embodiment, at least one of the antenna 452, the receiver 454, the receiving processor 456, and the controller/processor 459 is used to receive the first RAR (Random Access Response).

As one embodiment, at least one of the antenna 420, the transmitter 418, the transmitting processor 416, and the controller/processor 475 is used to send the first RAR.

As one embodiment, at least one of the antenna 452, the transmitter 454, the transmitting processor 468, and the controller/processor 459 is used to send the preamble according to the first random access resource group.

As one embodiment, at least one of the antenna 420, the receiver 418, the receiving processor 470, and the controller/processor 475 is used to receive the preamble sent according to the first random access resource group.

As one embodiment, at least one of the antenna 452, the transmitter 454, the transmitting processor 468, and the controller/processor 459 is used to send the first Msg3 (Message 3).

As one embodiment, at least one of the antenna 420, the receiver 418, the receiving processor 470, and the controller/processor 475 is used to receive the first Msg3.

As one embodiment, at least one of the antenna 452, the transmitter 454, the transmitting processor 468, and the controller/processor 459 is used to send the preamble according to the second random access resource group.

As one embodiment, at least one of the antenna 420, the receiver 418, the receiving processor 470, and the controller/processor 475 is used to receive the preamble sent according to the second random access resource group.

As one embodiment, the first communication equipment 450 corresponds to a first node in the present application.

As one embodiment, the second communication equipment 410 corresponds to a second node in the present application.

As one embodiment, the first communication equipment 450 is one user equipment.

As one embodiment, the first communication equipment 450 is one relay equipment.

As one embodiment, the first communication equipment 450 is one base station equipment.

As one embodiment, the second communication equipment 410 is one base station equipment.

As one embodiment, the second communication equipment 410 is one user equipment.

As one embodiment, the second communication equipment 410 is one relay equipment.

Typically, the first communication equipment 450 is one user equipment and the second communication equipment 410 is one base station equipment.

### Embodiment 5

Embodiment 5 illustrates a flow chart of wireless signal transmission according to one embodiment of the present application, as shown in FIG. 5. It is particularly illustrated that the sequence in the present example does not limit the sequence of signal transmission and implementation in the present application.

The **first node U01,** in Step S5101, during a first random access process, sends a preamble according to a first random access resource group; in Step S5102, in response to sending the preamble according to the first random access resource group, receives a first MAC subPDU, wherein the first MAC subPDU indicates a first backoff parameter value; in Step S5103, receives a first RAR (Random Access Response); in Step S5104, in response to receiving the first RAR, sends a first Msg3; in Step S5105, in response to receiving the first Msg3, receives a second MAC PDU; in Step S5106, determines that the first random access process is not complete; in Step S5107, in response to the first random access process not being completed, selects a second random access resource group; in Step S5108, sends the preamble according to the second random access resource group.

The **second node N02,** in Step S5201, receives the preamble; in Step S5202, sends the first MAC subPDU; in Step S5203, sends the first RAR; in Step S5204, receives the first Msg3; in Step S5205, sends the second MAC PDU; in Step S5203, receives the preamble.

In Embodiment 5, whether the execution time of the action of selecting the second random access resource group depends on the first backoff parameter value is related to the second random access resource group; the first random access resource group and the second random access resource group are both assigned to 4-step random access.

As one embodiment, after the Step S5102, the first node U01 determines that the first random access process is not complete.

As one embodiment, after the Step S5103, the first node U01 determines that the first random access process is not complete.

As one embodiment, after the Step S5104, the first node U01 determines that the first random access process is not complete.

As one embodiment, after the Step S5105, the first node U01 determines that the first random access process is not complete.

As one embodiment, the first node U01 is one user equipment.

As one embodiment, the first node U01 is one base station equipment.

As one embodiment, the first node U01 is one relay equipment.

As one embodiment, the second node N02 is one base station equipment.

As one embodiment, the second node N02 is one user equipment.

As one embodiment, the second node N02 is one relay equipment.

As one embodiment, the second node N02 is a maintenance base station of one serving cell of the first node U01.

As one embodiment, the second node N02 is a maintenance base station of the first cell.

As one embodiment, the first node U01 is one user equipment and the second node N02 is one base station equipment.

As one embodiment, the first node U01 is one user equipment and the second node N02 is one relay equipment.

As one embodiment, the first node U01 is one user equipment and the second node N02 is one user equipment

As one embodiment, the first node U01 is one base station equipment and the second node N02 is one base station equipment.

As one embodiment, the first node U01 is one relay equipment and the second node N02 is one base station equipment.

As one embodiment, the first node U01 and the second node N02 are connected via a Uu interface.

As one embodiment, the first node U01 and the second node N02 are connected via an Xn interface.

As one embodiment, the first node U01 and the second node N02 are connected via an X2 interface.

As one embodiment, the first node U01 and the second node N02 are connected via a PC5 interface.

As one embodiment, the first node U01 and the second node N02 are connected via an air interface.

As one embodiment, the second node N02 receives each preamble sent according to the first random access resource group.

As one embodiment, the second node N02 receives at least one preamble sent according to the first random access resource group.

As one embodiment, the Step S5105 is optional.

As one embodiment, the Step S5105 is present.

As one sub-embodiment of this embodiment, the second node N02 receives each preamble sent according to the second random access resource group.

As one sub-embodiment of this embodiment, the second node N02 receives at least one preamble sent according to the second random access resource group.

As one embodiment, the Step S5105 is absent.

As one sub-embodiment of this embodiment, the second node N02 does not receive any preamble sent according to the second random access resource group.

As one embodiment, the dashed box F5.1 is optional.

As one embodiment, each step of the dashed box F5.1 is present.

As one embodiment, each step of the dashed box F5.1 is absent.

As one embodiment, some steps in the dashed box F5.1 are absent.

As one embodiment, the first RAR is received, and the first Msg3 is sent, and the second MAC PDU is not received.

As one embodiment, the first RAR is received, and the first Msg3 is not sent, and the second MAC PDU is not received.

As one embodiment, the first RAR is not received, and the first Msg3 is not sent, and the second MAC PDU is not received.

As one embodiment, the first RAR is received.

As one sub-embodiment of this embodiment, the first RAR comprises one MAC subPDU, and a random access preamble identifier in the one MAC subPDU matches a first PREAMBLE_INDEX.

As one sub-embodiment of this embodiment, the first PREAMBLE_INDEX is an index of the preamble sent according to the first random access resource group.

As one sub-embodiment of this embodiment, if PRACH transmission is performed, the first PREAMBLE_INDEX is an index of one preamble in the preamble sent by the first random access resource group.

As one sub-embodiment of this embodiment, if PRACH transmission is performed, the first PREAMBLE_INDEX is an index of any preamble in the preamble sent by the first random access resource group.

As one sub-embodiment of this embodiment, the first node U01 considers that the random access response is received successfully only when the random access preamble identifier in the first RAR matches the first PREAMBLE _INDEX.

As one sub-embodiment of this embodiment, a first RAR is received in a first time window; the first MAC subPDU is received in the first time window.

As one sub-embodiment of this embodiment, the first time window is stopped in response to the first RAR being received.

As one sub-embodiment of this embodiment, the first time window is not stopped in response to the first RAR being received.

As one sub-embodiment of this embodiment, the first RAR comprises one MAC RAR.

As one sub-embodiment of this embodiment, the first RAR comprises one MAC subheader.

As one sub-embodiment of this embodiment, the first RAR is one MAC PDU.

As one sub-embodiment of this embodiment, the first RAR is one MAC subPDU.

As one sub-embodiment of this embodiment, the first RAR and the first MAC subPDU belong to the same MAC PDU.

As one sub-embodiment of this embodiment, the first RAR and the first MAC subPDU belong to two different MAC PDUs.

As one embodiment, the first RAR is not received.

As one sub-embodiment of this embodiment, the first time window expires.

As one sub-embodiment of this embodiment, one RAR is received in the first time window, the one RAR comprises one MAC sub-PDU, and the random access preamble identifier in the one MAC sub-PDU does not match the PREAMBLE _INDEX.

As one sub-embodiment of this embodiment, no MAC RAR is received in the first time window.

As one sub-embodiment of this embodiment, the expiration of at least the first time window is used to determine and consider that the random access response is received unsuccessfully.

As one sub-embodiment of this embodiment, the expiration of the first time window and the first RAR not being received is used to determine and consider that the random access response is received unsuccessfully.

As one embodiment, the first time window is one time window.

As one embodiment, the first time window is used to monitor a random access response.

As one embodiment, the first time window is a time window for monitoring a random access response.

As one embodiment, the first time window comprises a positive integer of slots.

As one embodiment, the first time window comprises a positive integer of subframes.

As one embodiment, the first time window comprise a positive integer of milliseconds.

As one embodiment, if PRACH repetition is not performed, the name of the first time window is ra-ResponseWindow.

As one embodiment, if PRACH repetition is not performed, the sending cutoff instant of the at least one preamble is used to determine the starting instant of the first time window.

As one embodiment, if PRACH repetition is performed, the name of the first time window is ra-ResponseWindow.

As one embodiment, if PRACH repetition is performed, the name of the first time window comprises ra-ResponseWindow.

As one embodiment, if PRACH repetition is performed, the name of the first time window comprises at least one of ra-ResponseWindow, Msg1(Message 1), PRACH and Repetition.

As one embodiment, the first Msg3 is sent.

As one sub-embodiment of this embodiment, the first RAR is received.

As one sub-embodiment of this embodiment, the first RAR indicates a UL grant.

As one sub-embodiment of this embodiment, the first RAR indicates a first TC-RNTI (Temporary C-RNTI).

As one sub-embodiment of this embodiment, the UL grant in the first RAR is used to schedule the first Msg3.

As one sub-embodiment of this embodiment, the first Msg3 is sent in response to the first RAR being received.

As one sub-embodiment of this embodiment, one DCI (Downlink Control Information) scrambled by the first TC-RNTI is used to schedule the first Msg3.

As one sub-embodiment of this embodiment, in response to the first Msg3 being sent, the first timer is started or restarted.

As one sub-embodiment of this embodiment, a first symbol at the end of the first Msg3 transmission is used to determine the instant when the first timer is started or restarted.

As one sub-embodiment of this embodiment, the first Msg3 is one Msg3.

As one sub-embodiment of this embodiment, the first Msg3 comprises a plurality of Msg3 repetitions.

As one sub-embodiment of this embodiment, the first Msg3 is one initial transmission of Msg3.

As one sub-embodiment of this embodiment, the first Msg3 is one re-transmission of Msg3.

As one sub-embodiment of this embodiment, the first Msg3 comprises only one of the first C-RNTI (Cell Radio Network Temporary Identifier), a MAC CE (Control Element), the first CCCH (Common Control Channel), and an SDU (Service data unit).

As one sub-embodiment of this embodiment, the first Msg3 comprises the first CCCH SDU.

As one sub-embodiment of this embodiment, the first CCCH SDU is one CCCH SDU.

As one sub-embodiment of this embodiment, the first CCCH SDU comprises an RRCResumeRequest message.

As one sub-embodiment of this embodiment, the first CCCH SDU comprises an RRCSetupRequest message.

As one sub-embodiment of this embodiment, the first CCCH SDU comprises an RRCReestablishmentRequest message.

As one sub-embodiment of this embodiment, the first Msg3 comprises a first C-RNTI MAC CE.

As one sub-embodiment of this embodiment, the first C-RNTI MAC CE is one C-RNTI MAC CE.

As one sub-embodiment of this embodiment, the first C-RNTI MAC CE comprises a first C-RNTI, and the first C-RNTI is a C-RNTI of the first node U01 in the first cell.

As one embodiment, the first Msg3 is not sent.

As one sub-embodiment of this embodiment, the first time window expires.

As one sub-embodiment of this embodiment, the first node U01 does not consider the random access response of the preamble sent according to the first random access resource group to be received successfully.

As one embodiment, the second MAC PDU is received.

As one sub-embodiment of this embodiment, the first Msg3 is sent.

As one sub-embodiment of this embodiment, the second MAC PDU is received when the first timer is running.

As one sub-embodiment of this embodiment, one first PDCCH transmission addressed to the first TC-RNTI is used to schedule the second MAC PDU.

As one sub-embodiment of this embodiment, the first Msg3 comprises the first CCCH SDU; the second MAC PDU does not comprise a UE Content Resolution Identity MAC CE (Control Element); the second MAC PDU does not comprise using the UE Content Resolution Identity MAC CE to determine and consider that contention resolution is unsuccessful.

As one sub-embodiment of this embodiment, the first Msg3 comprises the first CCCH SDU; the second MAC PDU comprises a UE Content Resolution Identity MAC CE, and UE Content Resolution Identity in the one UE Contention Resolution Identity MAC CE does not match the first CCCH SDU; the UE Contention Resolution Identity in the one UE Contention Resolution Identity MAC CE not matching the first CCCH SDU is used to determine and consider that contention resolution is unsuccessful.

As one embodiment, the second MAC PDU is not received.

As one sub-embodiment of this embodiment, the second MAC PDU is not sent by the second node N02.

As one sub-embodiment of this embodiment, the second MAC PDU is sent by the second node N02.

As one sub-embodiment of this embodiment, the first Msg3 is not sent.

As one sub-embodiment of this embodiment, the first Msg3 is sent.

As one sub-embodiment of this embodiment, the first timer expires; the expiration of the first timer is used to determine and consider that contention resolution is unsuccessful.

As one sub-embodiment of this embodiment, the first timer expires; the first Msg3 comprises the first C-RNTI MAC CE; no PDCCH transmission addressed to the first C-RNTI is received when the first timer is running.

As one sub-embodiment of this embodiment, the first timer expires; the first Msg3 comprises the first C-RNTI MAC CE; no PDCCH transmission is received when the first timer is running.

As one sub-embodiment of this embodiment, the first timer expires; the first Msg3 comprises the first C-RNTI MAC CE; no PDCCH transmission addressed to the first C-RNTI and comprises a UL grant for a new transmission is received when the first timer is running.

As one sub-embodiment of this embodiment, the first timer expires; the first Msg3 comprises the first CCCH SDU; no PDCCH transmission addressed to the first TEMPORARY_C-RNTI is received when the first timer is running.

As one sub-embodiment of this embodiment, the first timer expires; the first Msg3 comprises the first CCCH SDU; no PDCCH transmission is received when the first timer is running.

As one embodiment, the first node U01 considers that the random access response is received successfully, or the first node U01 considers that contention resolution is unsuccessful.

As one embodiment, the first node U01 considers that the random access response is received unsuccessfully; in response to "considers that the random access response is received unsuccessfully", the first random access process is determined to not be complete.

As one embodiment, the first node U01 considers that contention resolution is unsuccessful; in response to "considers that contention resolution is unsuccessful", the first random access process is determined to not be complete.

### Embodiment 6

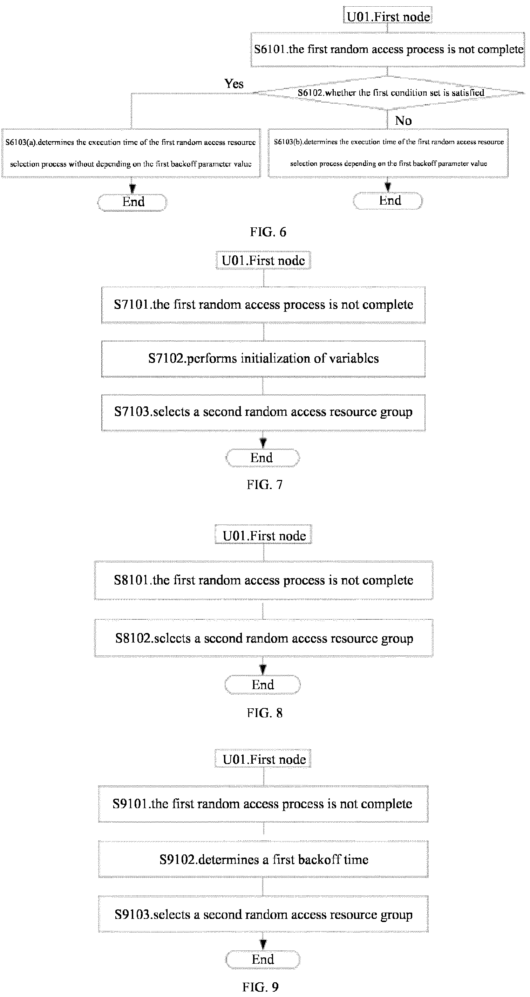

Embodiment 6 illustrates a flow chart of wireless signal transmission according to another embodiment of the present application, as shown in FIG. 6. It is particularly illustrated that the sequence in the present example does not limit the sequence of signal transmission and implementation in the present application.

The **first node U01,** in Step S6101, determines that the first random access process is not complete; in Step S6102, in response to the first random access process not being completed, determines whether a first condition set is satisfied, if the first condition set is satisfied, it proceeds to Step S6103 (a), and if the first condition set is not satisfied, it proceeds to Step S6103 (b); in the Step S6103 (a), determines the execution time of the first random access resource selection process without depending on the first backoff parameter value; in the Step S6103 (b), determines the execution time of the first random access resource selection process depending the first backoff parameter value.

In Embodiment 6, during the first random access resource selection process, the second random access resource group is selected.

As one embodiment, determining the execution time of the first random access resource selection process without depending on the first backoff parameter value is used to determine that the execution time of the action of selecting the second random access resource group does not depend on the first backoff parameter value.

As one embodiment, determining the execution time of the first random access resource selection process depending on the first backoff parameter value is used to determine the execution time of the action of selecting the second random access resource group depends on the first backoff parameter value.

As one embodiment, in response to the first random access process not being completed, if the first condition set is not satisfied, a first backoff time is determined first, then the first random access resource selection process is performed.

As one embodiment, in response to the first random access process not being completed, if the first condition set is not satisfied, the first backoff time is determined before the first random access resource selection process.

As one embodiment, in response to the first random access process not being completed, if the first condition set is satisfied, the first backoff time is not determined before performing the first random access resource selection process.

As one embodiment, in response to the first random access process not being completed, if the first condition set is satisfied, initialization of variables is performed first, then the first random access resource selection process is performed.

As one embodiment, in response to the first random access process not being completed, if the first condition set is satisfied, initialization of variables is performed before the first random access resource selection process.

As one embodiment, in response to the first random access process not being completed, if the first condition set is satisfied, closely following the first random access process not being completed, the first random access resource selection process is performed.

As one embodiment, in response to the first random access process not being completed, if the first condition set is satisfied, closely following the first random access process not being completed, the first random access resource selection process is performed.

As one embodiment, "initialization of variables is performed before the first random access resource selection process" is used to determine "performing initialization of variables before the action of selecting the second random access resource group".

As one embodiment, "closely following the first random access process not being completed, the first random access resource selection process is performed" is used to determine "closely following the first random access process not being completed, the second random access resource group is selected".

As one embodiment, "the first backoff time is determined before the first random access resource selection process" is used to determine "determining a first backoff time before the action of selecting the second random access resource group".

As one embodiment, the "determining the execution time of the first random access resource selection process without depending on the first backoff parameter value" comprises: not selecting a backoff time depending on the first backoff parameter value before performing the first random access resource selection process.

As one embodiment, the "determining the execution time of the first random access resource selection process without depending on the first backoff parameter value" comprises: determining the execution time of the first random access resource selection process without depending on one backoff time of the first backoff parameter value before performing the first random access resource selection process.

As one embodiment, the "determining the execution time of the first random access resource selection process without depending on the first backoff parameter value" comprises: determining the first backoff time depending on the first backoff parameter value before performing the first random access resource selection process.

As one embodiment, the "determining the execution time of the first random access resource selection process without depending on the first backoff parameter value" comprises: determining the execution time of the first random access resource selection process according to the first backoff time depending on the first backoff parameter value before performing the first random access resource selection process.

As one embodiment, during the first random access resource selection process, the second random access resource group is selected.

As one embodiment, the second random access resource group is selected through the first random access resource selection process.

As one embodiment, whether the first condition set is satisfied depends on the first counter.

As one embodiment, the first condition set is related to at least the first counter.

As one embodiment, the first condition set is a condition for selecting the second random access resource set.

As one embodiment, the first condition set is used to determine the selection of the second random access resource set.

As one embodiment, the first condition set is a condition for selecting the random access resource set to which the first random access resource group belongs.

As one embodiment, the first condition set is used to determine the random access resource set to which the first random access resource group belongs.

As one embodiment, the first random access resource group belongs to the second random access resource set.

### Embodiment 7

Embodiment 7 exemplifies a flow chart of the execution time of the selection of a second random access resource group not depending on a first backoff parameter value, according to one embodiment of the present application, as shown in FIG. 7. It is particularly illustrated that the sequence in the present example does not limit the sequence of signal transmission and implementation in the present application.

The **first node U01,** in Step S7101, determines that the first random access process is not complete; in Step S7102, in response to the first random access process not being completed, performs initialization of variables before the action of selecting the second random access resource group; in Step S7103, selects the second random access resource group.

In Embodiment 7, during a first random access process, in response to sending the preamble according to the first random access resource group, a first MAC subPDU is received, wherein the first MAC subPDU indicates a first backoff parameter value; the preamble is sent according to the second random access resource group; the first random access resource group and the second random access resource group are both assigned to 4-step random access; the execution time of the action of selecting the second random access resource group does not depend on the first backoff parameter value.

As one embodiment, the action of performing initialization of variables comprises: performing initialization of variables for PRACH repetition.

As one embodiment, the action of performing initialization of variables comprises: setting the first backoff factor.

As one sub-embodiment of this embodiment, the first backoff factor is set to 1.

As one sub-embodiment of this embodiment, first the first backoff factor is set to 1, then the first backoff factor is set as the first candidate backoff factor.

As one sub-embodiment of this embodiment, the second backoff factor is absent.

As one embodiment, the action of performing initialization of variables comprises: setting the second backoff factor; the K1 is equal to 1.

As one sub-embodiment of this embodiment, first the second backoff factor is set to 1, then the second backoff factor is set as the first candidate backoff factor.

As one sub-embodiment of this embodiment, the second backoff factor is set as the first candidate backoff factor.

As one sub-embodiment of this embodiment, the first backoff factor is not set.

As one sub-embodiment of this embodiment, the second backoff factor is used for PRACH repetition; the first backoff factor is not used for PRACH repetition.

As one embodiment, the action of performing initialization of variables comprises: setting PREAMBLE_POWER_RAMPING_STEP as the power ramping step dedicated to PRACH repetition.

As one embodiment, the action of performing initialization of variables comprises: setting one variable which name comprises at least one of PREAMBLE_POWER_RAMPING_STEP, Msg1 (Message 1), PRACH and Repetition as the power ramping step dedicated to PRACH repetition.

As one embodiment, the action of performing initialization of variables comprises: setting PREAMBLE _POWER_RAMPING_STEP as powerRampingStep.

As one embodiment, the action of performing initialization of variables comprises: first setting PREAMBLE_POWER_RAMPING_STEP as powerRampingStep, then setting PREAMBLE_POWER_RAMPING_STEP as the power ramping step dedicated to PRACH repetition.

As one embodiment, the action of performing initialization of variables comprises: first setting one variable which name comprises at least one of PREAMBLE_POWER_RAMPING _STEP, Msg1 (Message 1), PRACH and Repetition as powerRampingStep, and then setting the one variable which name comprises the PREAMBLE _POWER_RAMPING_STEP as the power ramping step dedicated to PRACH repetition.

As one embodiment, the action of performing initialization of variables comprises: setting PREAMBLE_POWER_RAMPING_STEP as powerRampingStep.

As one embodiment, the action of performing initialization of variables comprises: setting preambleTransMax to the maximum number of sendings of the preamble dedicated to PRACH repetition.

As one embodiment, the action of performing initialization of variables comprises: setting one variable which name comprises at least one of preambleTransMax, Msg1 (Message 1), PRACH and Repetition to the maximum number of sendings of the preamble dedicated to PRACH repetition.

As one embodiment, the action of performing initialization of variables comprises: setting preambleTransMax as preambleTransMax in RACH-ConfigGeneric.

As one embodiment, in response to the first random access process not being completed, initialization of variables is not performed before the action of selecting the second random access resource group; the execution time of the action of selecting the second random access resource group depends on the first backoff parameter value.

### Embodiment 8

Embodiment 8 exemplifies a flow chart of the execution time of the selection of a second random access resource group not depending on a first backoff parameter value, according to another embodiment of the present application, as shown in FIG. 8. It is particularly illustrated that the sequence in the present example does not limit the sequence of signal transmission and implementation in the present application.

The **first node U01,** in Step S8101, determines that the first random access process is not complete; in Step S8102, closely following the first random access process not being completed, selects the second random access resource group.

In Embodiment 8, during a first random access process, in response to sending the preamble according to the first random access resource group, a first MAC subPDU is received, wherein the first MAC subPDU indicates a first backoff parameter value; the preamble is sent according to the second random access resource group; the first random access resource group and the second random access resource group are both assigned to 4-step random access; the execution time of the action of selecting the second random access resource group does not depend on the first backoff parameter value.

As one embodiment, closely following the first random access process not being completed, the second random access resource group is selected.

As one embodiment, the "in response to the first random access process not being completed, selecting a second random access resource group" comprises: closely following the first random access process not being completed, selecting the second random access resource group.

As one embodiment, the "in response to the first random access process not being completed, selecting a second random access resource group" means: closely following the first random access process not being completed, performing the first random access resource selection process; during the first random access resource selection process, selecting the second random access resource group.

As one embodiment, within the time interval from the action of determining that the first random access process is not complete to the action of selecting the second random access resource group, the first node U01 does not perform initialization of variables.

As one embodiment, within the time interval from the action of determining that the first random access process is not complete to the action of selecting the second random access resource group, the first node U01 does not determine any backoff time depending on the first backoff parameter value.

As one embodiment, within the time interval from the action of determining that the first random access process is not complete to the action of selecting the second random access resource group, the first node U01 does not select any backoff time.

As one embodiment, within the time interval from the action of determining that the first random access process is not complete to the action of selecting the second random access resource group, the first node U01 does not apply the first backoff variable.

### Embodiment 9

Embodiment 9 exemplifies a flow chart of the execution time of the selection of a second random access resource group depending on a first backoff parameter value, according to one embodiment of the present application, as shown in FIG. 9. It is particularly illustrated that the sequence in the present example does not limit the sequence of signal transmission and implementation in the present application.

The **first node U01,** in Step S9101, determines that the first random access process is not complete; in Step S9102, in response to the first random access process not being completed, determines a first backoff time before the action of selecting the second random access resource group; in Step S9103, selects a second random access resource group.

In Embodiment 9, during a first random access process, in response to sending the preamble according to the first random access resource group, a first MAC subPDU is received, wherein the first MAC subPDU indicates a first backoff parameter value; the preamble is sent according to the second random access resource group; the first random access resource group and the second random access resource group are both assigned to 4-step random access; the execution time of the action of selecting the second random access resource group depends on the first backoff time; the first backoff time depends on the first backoff parameter value.

As one embodiment, "the execution time of the action of selecting the second random access resource group depends on the first backoff parameter value" comprises: the execution time of the action of selecting the second random access resource group depends on the first backoff time; the first backoff time depends on the first backoff parameter value.

As one embodiment, the action of selecting the second random access resource group is performed at least after the first backoff time is determined.

As one embodiment, during the first backoff time, the action of selecting the second random access resource group is performed.

As one embodiment, during the first backoff time, the action of selecting the second random access resource group is not performed.

As one embodiment, during the first backoff time, the action of selecting the second random access resource group is not performed.

As one embodiment, after the first backoff time, the action of selecting the second random access resource group is performed.

As one embodiment, the action of selecting the second random access resource group is performed starting from the instance of determining the first backoff time to after the first backoff time.

As one embodiment, the action of selecting the second random access resource group is performed starting from the instance of determining that the first random access process is not complete to after the start of the first backoff time.

As one embodiment, the first backoff time depends on at least the first backoff parameter value.

As one embodiment, the first backoff time depends on the first backoff parameter value and the first backoff factor.

As one embodiment, the first backoff time depends on the first backoff parameter value, the first backoff factor, and the first parameter.

As one embodiment, the first backoff time depends on the first backoff variable; the first backoff variable depends on at least the first backoff parameter value.

As one embodiment, the first backoff time depends on the first backoff variable; the first backoff variable depends on the first backoff parameter value and the first backoff factor.

As one embodiment, the first backoff time depends on the first backoff variable; the first backoff variable depends on the first backoff parameter value, the first backoff factor, and the first parameter.

As one embodiment, the first backoff time depends on the first backoff variable and the first parameter; the first backoff variable depends on at least the first backoff parameter value.

As one embodiment, the first backoff time depends on the first backoff variable and the first parameter; the first backoff variable depends on the first backoff parameter value and the first backoff factor.

As one embodiment, the action of determining the first backoff time comprises: determining the first backoff time according to the first backoff variable.

As one sub-embodiment of this embodiment, the first backoff time is determined from 0 to the first backoff variable.

As one sub-embodiment of this embodiment, one random backoff time is selected from 0 to the first backoff variable as the first backoff time.

As one sub-embodiment of this embodiment, the first backoff time is randomly selected from 0 to the first backoff variable according to uniform distribution.

As one embodiment, the action of determining the first backoff time comprises: determining the first backoff time according to the first backoff variable and the first parameter.

As one sub-embodiment of this embodiment, the second backoff time is determined from 0 to the first backoff variable; the first backoff time is determined according to the second backoff time and the first parameter.

As one sub-embodiment of this embodiment, one random backoff time is selected from 0 to the first backoff variable as the second backoff time; the first backoff time is determined according to the second backoff time and the first parameter.

As one sub-embodiment of this embodiment, the second backoff time is randomly selected from 0 to the first backoff variable according to uniform distribution; the first backoff time is determined according to the second backoff time and the first parameter.

As one sub-embodiment of this embodiment, the first backoff time is related to (the product of the second backoff time and the first parameter).

As one sub-embodiment of this embodiment, the first backoff time is equal to (the product of the second backoff time and the first parameter).

As one sub-embodiment of this embodiment, the first backoff time is linearly related to (the product of the second backoff time and the first parameter).

As one sub-embodiment of this embodiment, the first backoff time = the second backoff time × the first parameter.

As one embodiment, the first backoff time is determined according to the first backoff variable and the first parameter.

As one embodiment, the second backoff time is determined according to the first backoff variable, and the first backoff time is determined according to the second backoff time and the first parameter.

As one embodiment, a second backoff variable is determined according to the first backoff variable and the first parameter, and the first backoff time is determined according to the second backoff variable.

As one embodiment, the second backoff variable is related to (the product of the first backoff variable and the first parameter).

As one embodiment, the second backoff variable = the first backoff variable × the first parameter.

### Embodiment 10

Embodiment 10 exemplifies a schematic diagram of whether the execution time of the selection of a second random access resource group depends on a first backoff parameter value is related to the second random access resource group, according to one embodiment of the present application.

In Embodiment 10, the first random access resource group consists of K1 air interface resources and the second random access resource group consists of K2 air interface resources; the K1 is a positive integer and the K2 is an integer greater than 1.

As one embodiment, one air interface resource is associated with one downlink (DL) reference signal (RS).

As one embodiment, one air interface resource is associated with one SSB.

As one embodiment, one air interface resource is associated with one CSI-RS.

As one embodiment, one air interface resource is configured for one uplink carrier.

As one embodiment, one air interface resource is configured for one UL BWP.

As one embodiment, the PRACH occasion of one air interface resource on the time domain is related to one SSB.

As one embodiment, the PRACH occasion of one air interface resource on the time domain is related to one reference SSB.

As one embodiment, one air interface resource is configured to at least one preamble.

As one embodiment, one air interface resource is reserved for one preamble.

As one embodiment, one air interface resource is reserved for one sending of one preamble.

As one embodiment, one air interface resource comprises one preamble.

As one embodiment, one air interface resource occupies one PRACH occasion on the time domain.

As one embodiment, one air interface resource occupies a plurality of REs on the time-frequency domain.

As one embodiment, one air interface resource comprises a time domain resource and a frequency domain resource.

As one embodiment, one air interface resource comprises a time domain resource, a frequency domain resource, and a code domain resource.

As one embodiment, one air interface resource comprises a time domain resource, a frequency domain resource, a spatial domain resource, and a code domain resource.

As one embodiment, one air interface resource comprises a time domain resource used for one preamble.

As one embodiment, one air interface resource comprises a frequency domain resource used for one preamble.

As one embodiment, one air interface resource comprises a spatial domain resource used for one preamble.

As one embodiment, the frequency domain resource comprises a BWP.

As one embodiment, the frequency domain resource includes an uplink carrier.

As one embodiment, the time domain resource comprises a PRACH occasion.

As one embodiment, the K1 is determined according to at least RSRP.

As one embodiment, the K1 is determined according to at least one counter.

As one embodiment, the K1 is determined according to at least the first counter.

As one embodiment, the K1 is configurable.

As one embodiment, the K1 is preconfigured.

As one embodiment, the K1 is predefined.

As one embodiment, the K1 is configured to the random access resource set to which the first random access resource group belongs.

As one embodiment, the K1 is one constant.

As one embodiment, the K1 is equal to 1.

As one embodiment, the K1 is greater than 1.

As one embodiment, the K2 is determined according to at least RSRP.

As one embodiment, the K2 is determined according to at least one counter.

As one embodiment, the K2 is determined according to at least the first counter.

As one embodiment, the K2 is configurable.

As one embodiment, the K2 is preconfigured.

As one embodiment, the K2 is predefined.

As one embodiment, the K2 is configured to the random access resource set to which the second random access resource group belongs.

As one embodiment, the K2 is greater than the K1.

As one embodiment, the K2 is smaller than the K1.

As one embodiment, the K2 is equal to the K1.

As one embodiment, the K2 is the K1.

As one embodiment, the K1 air interface resources are used for one PRACH repetition.

As one embodiment, each air interface resource in the K1 air interface resources is used for the same preamble.

As one embodiment, each air interface resource in the K1 air interface resources is used for at least two different preambles.

As one embodiment, within the time interval between the sendings of the preamble by any two air interface resources in the K1 air interface resources, the PREAMBLE_POWER_RAMPING_COUNTER for the first random access process is not incremented; the K1 is greater than 1.

As one embodiment, within the time interval between the sendings of the preamble by any two air interface resources in the K1 air interface resources, the PREAMBLE_TRANSMISSION_COUNTER for the first random access process is not incremented; the K1 is greater than 1.

As one embodiment, the K1 air interface resources are configured to one SSB; the K1 is equal to 1.

As one embodiment, any two air interface resources in the K1 air interface resources are configured to the same SSB; the K1 is greater than 1.

As one embodiment, any two air interface resources in the K1 air interface resources are configured to at least two SSBs; the K1 is greater than 1.

As one embodiment, the K2 air interface resources are used for one PRACH repetition.

As one embodiment, each air interface resource in the K2 air interface resources is used for the same preamble.

As one embodiment, each air interface resource in the K2 air interface resources is used for at least two different preambles.

As one embodiment, within the time interval between the sendings of the preamble by any two air interface resources in the K2 air interface resources, the PREAMBLE_POWER_RAMPING_COUNTER for the first random access process is not incremented.

As one embodiment, within the time interval between the sendings of the preamble by any two air interface resources in the K2 air interface resources, the PREAMBLE_TRANSMISSION_COUNTER for the first random access process is not incremented.

As one embodiment, any two air interface resources in the K2 air interface resources are configured to the same SSB.

As one embodiment, any two air interface resources in the K2 air interface resources are configured to at least two SSBs.

As one embodiment, any preamble in the K1 air interface resources is different from any preamble in the K2 air interface resources.

As one embodiment, the K1 air interface resources and the K2 air interface resources are different.

As one embodiment, any air interface resource in the K1 air interface resources is different from any air interface resource in the K2 air interface resources.

As one embodiment, at least one air interface resource in the K1 air interface resources is different from any air interface resource in the K2 air interface resources.

As one embodiment, "whether the execution time of the action of selecting the second random access resource group depends on the first backoff parameter value is related to the second random access resource group" comprises: the execution time of the action of selecting the second random access resource group not depending on the first backoff parameter value and K1 being greater than a first threshold and K2 being greater than the first threshold; or the execution time of the action of selecting the second random access resource group depending on the first backoff parameter value and K1 being smaller than a first threshold and K2 being smaller than the first threshold.

As one embodiment, "whether the execution time of the action of selecting the second random access resource group depends on the first backoff parameter value is related to the second random access resource group" comprises: the execution time of the action of selecting the second random access resource group not depending on the first backoff parameter value and K1 being greater than a first threshold and K2 being greater than the first threshold; or the execution time of the action of selecting the second random access resource group depending on the first backoff parameter value and K1 not being greater than a first threshold and K2 not being greater than the first threshold.

As one embodiment, "whether the execution time of the action of selecting the second random access resource group depends on the first backoff parameter value is related to the second random access resource group" comprises: the execution time of the action of selecting the second random access resource group not depending on the first backoff parameter value and K1 being smaller than a first threshold and K2 being greater than the first threshold; or the execution time of the action of selecting the second random access resource group depends on the first backoff parameter value and K1 being greater than a first threshold and K2 being smaller than the first threshold.

As one embodiment, "whether the execution time of the action of selecting the second random access resource group depends on the first backoff parameter value is related to the second random access resource group" comprises: the execution time of the action of selecting the second random access resource group not depending on the first backoff parameter value and K1 being equal to a first threshold and K2 being greater than the first threshold; or the execution time of the action of selecting the second random access resource group depending on the first backoff parameter value and K1 being equal to a first threshold and K2 not being greater than the first threshold.

As one embodiment, "whether the execution time of the action of selecting the second random access resource group depends on the first backoff parameter value is related to the second random access resource group" comprises: the execution time of the action of selecting the second random access resource group not depending on the first backoff parameter value and K1 being equal to a first threshold and K2 not being greater than the first threshold; or the execution time of the action of selecting the second random access resource group depending on the first backoff parameter value and K1 being equal to a first threshold and K2 being greater than the first threshold.

As one embodiment, when at least K1 is equal to the first threshold and K2 is not greater than the first threshold, the first condition set is satisfied; when K1 is equal to the first threshold and K2 is greater than the first threshold, the first condition set is not satisfied.

As one embodiment, when at least K1 is equal to the first threshold and K2 is greater than the first threshold, the first condition set is satisfied; when K1 is equal to the first threshold and K2 is not greater than the first threshold, the first condition set is not satisfied.

As one embodiment, when at least K1 is smaller than the first threshold and K2 is greater than the first threshold, the first condition set is satisfied; when K1 is greater than the first threshold and K2 is smaller than the first threshold, the first condition set is not satisfied.

As one embodiment, when at least K1 is greater than the first threshold and K2 is greater than the first threshold, the first condition set is satisfied; when K1 is smaller than the first threshold and K2 is smaller than the first threshold, the first condition set is not satisfied.

As one embodiment, when at least K1 is greater than the first threshold and K2 is greater than the first threshold, the first condition set is satisfied; when K1 is not greater than the first threshold and K2 is not greater than the first threshold, the first condition set is not satisfied.

As one embodiment, the first threshold is one positive integer.

As one embodiment, the first threshold is configurable.

As one embodiment, the first threshold is preconfigured.

As one embodiment, the first threshold is equal to 1.

As one embodiment, the first threshold is greater than 1.

As one embodiment, the first threshold is the K1.

As one embodiment, the first condition set is related to at least one of the K1 and the K2.

### Embodiment 11

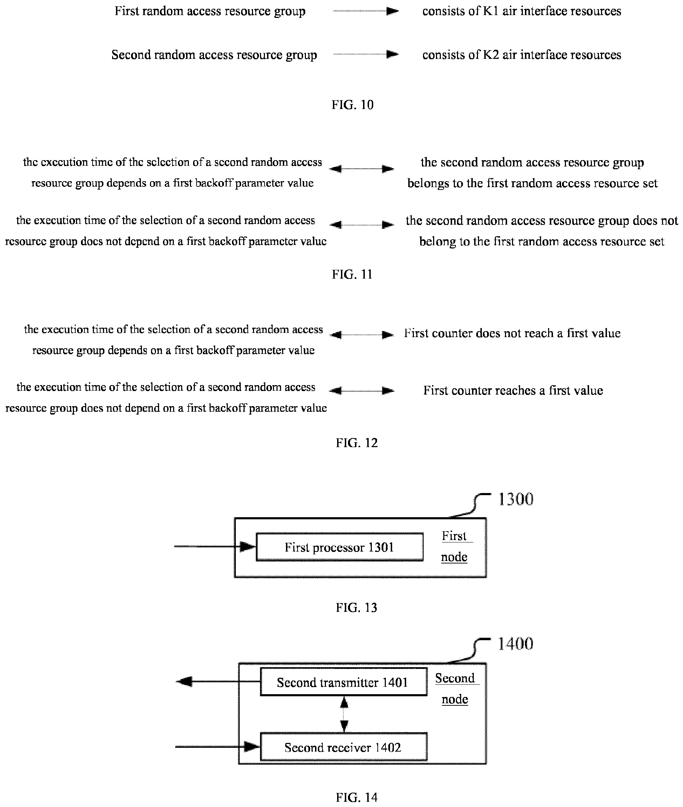

Embodiment 11 exemplifies a schematic diagram of whether the execution time of the selection of a second random access resource group depends on a first backoff parameter value is related to the second random access resource group, according to another embodiment of the present application, as shown in FIG. 11.

In Embodiment 11, "whether the execution time of the action of selecting the second random access resource group depends on the first backoff parameter value is related to the second random access resource group" comprises: the execution time of the action of selecting the second random access resource group depending on the first backoff parameter value and the second random access resource group belonging to a first random access resource set; or the execution time of the action of selecting the second random access resource group not depending on the first backoff parameter value and the second random access resource group not belonging to the first random access resource set.

As one embodiment, the execution time of the action of selecting the second random access resource group depends on the first backoff parameter value and the second random access resource group belongs to the first random access resource set; the first random access resource group belongs to the first random access resource set.

As one embodiment, the execution time of the action of selecting the second random access resource group does not depend on the first backoff parameter value and the second random access resource group belongs to the second random access resource set; the first random access resource group belongs to the first random access resource set.

As one embodiment, the second random access resource set is one random access resource set other than the first random access resource set.

As one embodiment, the second random access resource set is configured for PRACH repetition and the second random access resource set is not configured for PRACH repetition.

As one embodiment, the second random access resource set is configured for PRACH repetition; the second random access resource set is configured for PRACH repetition; the second random access resource set is different from the first random access resource set.

As one sub-embodiment of this embodiment, the maximum number of sendings of the preamble in one PRACH repetition corresponding to the second random access resource set is equal to the maximum number of sendings of the preamble in one PRACH repetition corresponding to the first random access resource set.

As one sub-embodiment of this embodiment, the maximum number of sendings of the preamble in one PRACH repetition corresponding to the second random access resource set is not equal to the maximum number of sendings of the preamble in one PRACH repetition corresponding to the first random access resource set.

As one sub-embodiment of this embodiment, the maximum number of sendings of the preamble in one PRACH repetition corresponding to the second random access resource set is greater than the maximum number of sendings of the preamble in one PRACH repetition corresponding to the first random access resource set.

As one embodiment, only when the criteria for selecting the second random access resource set are satisfied, the first condition set is satisfied; otherwise, the first condition set is not satisfied.

As one embodiment, when the criteria for selecting the second random access resource set are satisfied, the first condition set is satisfied; otherwise, the first condition set is not satisfied.

As one embodiment, when at least the criteria for selecting the second random access resource set are satisfied, the first condition set is satisfied; otherwise, the first condition set is not satisfied.

As one embodiment, "the criteria for selecting the second random access resource set are satisfied" is used to determine that the second random access resource group is selected in the second random access resource set.

As one embodiment, "the criteria for selecting the second random access resource set are not satisfied" is used to determine that the second random access resource group is selected in the first random access resource set.

### Embodiment 12

Embodiment 12 exemplifies a schematic diagram of whether the execution time of the selection of a second random access resource group depends on a first backoff parameter value is related to the second random access resource group, according to yet one embodiment of the present application, as shown in FIG. 12;

In Embodiment 12, "whether the execution time of the action of selecting the second random access resource group depends on the first backoff parameter value is related to the second random access resource group" comprises: the execution time of the action of selecting the second random access resource group not depending on the first backoff parameter value and a first counter reaching a first value; or the execution time of the action of selecting the second random access resource group depending on the first backoff parameter value and a first counter not reaching the first value; the first counter being used to determine the number of sendings of the preamble.

As one embodiment, the initial value of the first counter is equal to 1.

As one embodiment, the initial value of the first counter is equal to 0.

As one embodiment, the first counter is one MAC sublayer counter.

As one embodiment, the first counter is PREAMBLE_TRANSMISSION_COUNTER.

As one embodiment, the first counter is PREAMBLE_POWER_RAMPING_COUNTER.

As one embodiment, the first counter is a counter other than PREAMBLE_TRANSMISSION_COUNTER and PREAMBLE_POWER_RAMPING_COUNTER.

As one embodiment, the name of the first counter comprises at least one of PREAMBLE, TRANSMISSION, POWER, RAMPING, COUNTER, Msg1 (Message 1), PRACH and Repetition.

As one embodiment, the first value is configurable.

As one embodiment, the first value is preconfigured.

As one embodiment, the first value is a positive integer.

As one embodiment, the first value is configured by an RRC message.

As one embodiment, the first value is not greater than the maximum number of sendings of a random access preamble during the first random access process.

As one embodiment, the first value is not greater than preambleTransMax.

As one embodiment, the name of the first value comprises at least one of TransMax, Msg1 (Message 1), PRACH and Repetition.

As one embodiment, the first value is used to determine the maximum number of attempts for random access in one random access resource set.

As one embodiment, the first value is used to determine the minimum number of times to start performing PRACH repetition during the first random access process.

As one embodiment, the first value is equal to a second value + 1.

As one sub-embodiment of this embodiment, the second value is configurable.

As one sub-embodiment of this embodiment, the second value is preconfigured.

As one sub-embodiment of this embodiment, the second value is a positive integer.

As one sub-embodiment of this embodiment, the second value is configured by an RRC message.

As one sub-embodiment of this embodiment, the second value is not greater than the maximum number of sendings of a random access preamble during the first random access process.

As one sub-embodiment of this embodiment, the second value is not greater than preambleTransMax.

As one sub-embodiment of this embodiment, the name of the second value comprises at least one of TransMax, Msgl (Message 1), PRACH and Repetition.

As one embodiment, the first counter is incremented by 1 each time.

As one embodiment, the first counter is incremented by not less than 1 each time.

As one embodiment, during the first random access process, each time a preamble is sent according to one random access resource group, the first counter is incremented.

As one embodiment, each time the first random access process is determined to not be complete, the first counter is incremented.

As one embodiment, whether the first counter is incremented is related to whether one Msg3 is sent.

As one sub-embodiment of this embodiment, the first counter is incremented and one Msg3 is not sent.

As one sub-embodiment of this embodiment, the first counter is not incremented and one Msg3 is sent.

As one embodiment, whether the first counter is incremented is related to whether the one RAR is received.

As one sub-embodiment of this embodiment, the first counter is incremented and the one RAR is not received.

As one sub-embodiment of this embodiment, the first counter is not incremented and the one RAR is received.

As one embodiment, within the time interval from sending the preamble according to the first random access resource group to sending the preamble according to the second random access resource group, the first counter is incremented.

As one embodiment, within the time interval from sending the preamble according to the first random access resource group to sending the preamble according to the second random access resource group, the first counter is incremented and the first Msg3 is not sent.

As one embodiment, within the time interval from sending the preamble according to the first random access resource group to sending the preamble according to the second random access resource group, the first counter is incremented and the first RAR is not received.

As one embodiment, during the first random access process, PRACH repetition is not performed before the first counter reaches the first value; PRACH repetition is performed after the first counter reaches the first value; the K1 is equal to 1.

As one embodiment, when the first counter reaches the first value, the first condition set is satisfied; otherwise, the first condition set is not satisfied.

As one embodiment, when at least the first counter reaches the first value, the first condition set is satisfied; as long as the first counter does not reach the first value, the first condition set is not satisfied.

As one embodiment, in response to the first random access process not being completed, if the incremented first counter reaches the first value, the first condition set is satisfied; otherwise, the first condition set is not satisfied.

As one embodiment, in response to the first random access process not being completed, if at least the incremented first counter reaches the first value, the first condition set is satisfied; as long as the incremented first counter does not reach the first value, the first condition set is satisfied.

As one embodiment, the first value is applied.

As one embodiment, the first value is configured.

### Embodiment 13

Embodiment 13 exemplifies a structural block diagram of a processing apparatus for use in a first node, according to one embodiment of the present application; as shown in FIG. 13. In FIG. 13, a processing apparatus 1300 in the first node comprises a first processor 1301.

The first processor 1301, during a first random access process, sends a preamble according to a first random access resource group; in response to sending the preamble according to the first random access resource group, receives a first MAC subPDU, wherein the first MAC subPDU indicates a first backoff parameter value; in response to the first random access process not being completed, selects a second random access resource group, and sends the preamble according to the second random access resource group;
in Embodiment 13, whether the execution time of the action of selecting the second random access resource group depends on the first backoff parameter value is related to the second random access resource group; the first random access resource group and the second random access resource group are both assigned to 4-step random access.

As one embodiment, the first processor 1301, in response to the first random access process not being completed, performs initialization of variables before the action of selecting the second random access resource group; wherein the execution time of the action of selecting the second random access resource group does not depend on the first backoff parameter value.

As one embodiment, closely following the first random access process not being completed, the second random access resource group is selected; the execution time of the action of selecting the second random access resource group does not depend on the first backoff parameter value.

As one embodiment, the first processor 1301, in response to the first random access process not being completed, determines a first backoff time before the action of selecting the second random access resource group; wherein the execution time of the action of selecting the second random access resource group depends on the first backoff time; the first backoff time depends on the first backoff parameter value.

As one embodiment, the first random access resource group consists of K1 air interface resources and the second random access resource group consists of K2 air interface resources; the K1 is a positive integer and the K2 is an integer greater than 1.

As one embodiment, "whether the execution time of the action of selecting the second random access resource group depends on the first backoff parameter value is related to the second random access resource group" comprises: the execution time of the action of selecting the second random access resource group not depending on the first backoff parameter value and K1 being greater than a first threshold and K2 being greater than the first threshold; or the execution time of the action of selecting the second random access resource group depending on the first backoff parameter value and K1 being smaller than a first threshold and K2 being smaller than the first threshold.

As one embodiment, "whether the execution time of the action of selecting the second random access resource group depends on the first backoff parameter value is related to the second random access resource group" comprises: the execution time of the action of selecting the second random access resource group depending on the first backoff parameter value and the second random access resource group belonging to a first random access resource set; or the execution time of the action of selecting the second random access resource group not depending on the first backoff parameter value and the second random access resource group not belonging to the first random access resource set.

As one embodiment, "whether the execution time of the action of selecting the second random access resource group depends on the first backoff parameter value is related to the second random access resource group" comprises: the execution time of the action of selecting the second random access resource group not depending on the first backoff parameter value and a first counter reaching a first value; or the execution time of the action of selecting the second random access resource group depending on the first backoff parameter value and a first counter not reaching the first value; the first counter being used to determine the number of sendings of the preamble.

As one embodiment, the first processor 1301, in response to the first random access process not being completed, determines whether the execution time of a first random access resource selection process depends on the first backoff parameter value according to whether a first condition set is satisfied; wherein during the first random access resource selection process, selects the second random access resource group; if the first condition set is satisfied, determines the execution time of the first random access resource selection process without depending on the first backoff parameter value; if the first condition set is not satisfied, determines the execution time of the first random access resource selection process depending on the first backoff parameter value.

As one embodiment, the first processor 1301 comprises a first receiver.

As one embodiment, the first processor 1301 comprises a first transmitter.

As one embodiment, the first processor 1301 comprises at least a first receiver and a first transmitter.

As one embodiment, the first receiver comprises the antenna 452, the receiver 454, the multi-antenna receiving processor 458, the receiving processor 456, the controller/processor 459, the memory 460, and the data source 467 in FIG. 4 of the present application.

As one embodiment, the first receiver comprises the antenna 452, the receiver 454, the multi-antenna receiving processor 458, and the receiving processor 456 in FIG. 4 of the present application.

As one embodiment, the first receiver comprises the antenna 452, the receiver 454, and the receiving processor 456 in FIG. 4 of the present application.

As one embodiment, the first transmitter comprises the antenna 452, the transmitter 454, the multi-antenna transmitting processor 457, the transmitting processor 468, the controller/processor 459, the memory 460, and the data source 467 in FIG. 4 of the present application.

As one embodiment, the first transmitter comprises the antenna 452, the transmitter 454, the multi-antenna transmitting processor 457, and the transmitting processor 468 in FIG. 4 of the present application.

As one embodiment, the first transmitter comprises the antenna 452, the transmitter 454, and the transmitting processor 468 in FIG. 4 of the present application.

### Embodiment 14

Embodiment 14 exemplifies a structural block diagram of a processing apparatus for use in a second node according to one embodiment of the present application; as shown in FIG. 14. In FIG. 14, the processing apparatus 1400 in the second node comprises a second transmitter 1401 and a second receiver 1402.

The second receiver 1402, during a first random access process, receives a preamble sent according to a first random access resource group;
a second transmitter 1401, in response to receiving the preamble sent by the first random access resource group, sends a first MAC subPDU, wherein the first MAC subPDU indicates a first backoff parameter value;
the second receiver 1402, receives the preamble sent according to a second random access resource group;
in Embodiment 14, in response to the first random access process not being completed, the second random access resource group is selected; whether the execution time of the selection of the second random access resource group depends on the first backoff parameter value is related to the second random access resource group; the first random access resource group and the second random access resource group are both assigned to 4-step random access.

As one embodiment, in response to the first random access process not being completed, initialization of variables is performed before the second random access resource group is selected; wherein the execution time of the selection of the second random access resource group does not depend on the first backoff time.

As one embodiment, closely following the first random access process not being completed, the second random access resource group is selected; the execution time of the selection of the second random access resource group does not depend on the first backoff time.

As one embodiment, in response to the first random access process not being completed, the first backoff time is determined before the second random access resource group is selected; wherein the execution time of the selection of the second random access resource group depends on the first backoff time; the first backoff time depends on the first backoff parameter value.

As one embodiment, the first random access resource group consists of K1 air interface resources and the second random access resource group consists of K2 air interface resources; the K1 is a positive integer and the K2 is an integer greater than 1.

As one embodiment, "whether the execution time of the action of selecting the second random access resource group depends on the first backoff parameter value is related to the second random access resource group" comprises: the execution time of the action of selecting the second random access resource group not depending on the first backoff parameter value and K1 being greater than a first threshold and K2 being greater than the first threshold; or the execution time of the action of selecting the second random access resource group depending on the first backoff parameter value and K1 being smaller than a first threshold and K2 being smaller than the first threshold.

As one embodiment, "whether the execution time of the action of selecting the second random access resource group depends on the first backoff parameter value is related to the second random access resource group" comprises: the execution time of the action of selecting the second random access resource group depending on the first backoff parameter value and the second random access resource group belonging to a first random access resource set; or the execution time of the action of selecting the second random access resource group not depending on the first backoff parameter value and the second random access resource group not belonging to the first random access resource set.

As one embodiment, "whether the execution time of the action of selecting the second random access resource group depends on the first backoff parameter value is related to the second random access resource group" comprises: the execution time of the action of selecting the second random access resource group not depending on the first backoff parameter value and a first counter reaching a first value; or the execution time of the action of selecting the second random access resource group depending on the first backoff parameter value and a first counter not reaching the first value; the first counter being used to determine the number of sendings of the preamble.

As one embodiment, in response to the first random access process not being completed, whether a first condition set is satisfied is used to determine whether the execution time of a first random access resource selection process depends on the first backoff parameter value; wherein during the first random access resource selection process, the second random access resource group is selected; if the first condition set is satisfied, the execution time of the first random access resource selection process does not depend on the first backoff parameter value; if the first condition set is not satisfied, the execution time of the first random access resource selection process depends on the first backoff parameter value.

As one embodiment, the second transmitter 1401 comprises the antenna 420, the transmitter 418, the multi-antenna transmitting processor 471, the transmitting processor 416, the controller/processor 475, and the memory 476 in FIG. 4 of the present application.

As one embodiment, the second transmitter 1401 comprises the antenna 420, the transmitter 418, the multi-antenna transmitting processor 471 and the transmitting processor 416 in FIG. 4 of the present disclosure.

As one embodiment, the second transmitter 1401 comprises the antenna 420, the transmitter 418, and the transmitting processor 416 in FIG. 4 of the present application.

As one embodiment, the second receiver 1402 comprises the antenna 420, the receiver 418, the multi-antenna receiving processor 472, the receiving processor 470, the controller/processor 475, and the memory 476 in FIG. 4 of the present application.

As one embodiment, the second receiver 1402 comprises at least one of the antenna 420, the receiver 418, the multi-antenna receiving processor 472, and the receiving processor 470 in FIG. 4 of the present application.

As one embodiment, the second receiver 1402 comprises the antenna 420, the receiver 418, and the receiving processor 470 in FIG. 4 of the present application.

Those of ordinary skill in the art may understand that all or part of the steps in the methods described above may be accomplished by instructing relevant hardware through a program that may be stored in computer-readable storage media, such as read only memory, hard disk, or optical disk. Optionally, the steps of the embodiments described above, in whole or in part, may also be implemented using one or a plurality of integrated circuits. Accordingly, the various module units in the embodiments described above may be implemented in the form of hardware or in the form of software function modules. The present application is not limited to the combination of software and hardware of any particular form. The user equipment, terminals, and UEs in the present application include but are not limited to unmanned aerial vehicles, communication modules on unmanned aerial vehicles, remote-controlled aircraft, aircraft, small aircraft, mobile phones, tablets, notebooks, in-vehicle communication equipment, wireless sensors, network cards, IoT terminals, RFID terminals, NB-IoT terminals, MTC (Machine Type Communication) terminals, eMTC (enhanced MTC) terminals, data cards, network cards, in-vehicle communication equipment, low-cost mobile phones, low-cost tablets, and other wireless communication equipment. The base stations or system equipment in the present application include, but are not limited to, Macrocell base stations, Microcell base stations, Femtocell base stations, relay base stations, gNB NR node B, TRP (Transmitter Receiver Point), and other wireless communication equipment.

The foregoing is merely a preferred embodiment of the present application and is not intended to limit the protective scope of the present application. Any modifications, equivalent substitutions, improvements, and the like made within the spirit and principles of the present application shall be included within the scope of protection of the present application.

## Claims

1. A first node for wireless communication, **characterized in that**, the node comprises:
a first processor, during a first random access process, sending a preamble according to a first random access resource group; in response to sending the preamble according to the first random access resource group, receiving a first MAC subPDU, wherein the first MAC subPDU indicates a first backoff parameter value; and in response to the first random access process not being completed, selecting a second random access resource group, and sending the preamble according to the second random access resource group;
wherein whether the execution time of the action of selecting the second random access resource group depends on the first backoff parameter value is related to the second random access resource group; the first random access resource group and the second random access resource group are both assigned to 4-step random access.

2. The first node according to Claim 1, **characterized in that**, the node comprises:
the first processor, in response to the first random access process not being completed, performing initialization of variables before the action of selecting the second random access resource group;
wherein the execution time of the action of selecting the second random access resource group does not depend on the first backoff parameter value.

3. The first node according to Claim 1, **characterized in that**, closely following the first random access process not being completed, the second random access resource group is selected; the execution time of the action of selecting the second random access resource group does not depend on the first backoff parameter value.

4. The first node according to Claim 1, **characterized in that**, the node comprises:
the first processor, in response to the first random access process not being completed, determining a first backoff time before the action of selecting the second random access resource group;
wherein the execution time of the action of selecting the second random access resource group depends on the first backoff time; the first backoff time depends on the first backoff parameter value.

5. The first node according to any one of Claims 1 to 4, **characterized in that**, the first random access resource group consists of K1 air interface resources and the second random access resource group consists of K2 air interface resources; the K1 is a positive integer and the K2 is an integer greater than 1.

6. The first node according to Claim 5, **characterized in that**, "whether the execution time of the action of selecting the second random access resource group depends on the first backoff parameter value is related to the second random access resource group" comprises: the execution time of the action of selecting the second random access resource group not depending on the first backoff parameter value and K1 being greater than a first threshold and K2 being greater than the first threshold; or the execution time of the action of selecting the second random access resource group depending on the first backoff parameter value and K1 being smaller than a first threshold and K2 being smaller than the first threshold.

7. The first node according to any one of Claims 1 to 6, **characterized in that**, "whether the execution time of the action of selecting the second random access resource group depends on the first backoff parameter value is related to the second random access resource group" comprises: the execution time of the action of selecting the second random access resource group depending on the first backoff parameter value and the second random access resource group belonging to a first random access resource set; or the execution time of the action of selecting the second random access resource group not depending on the first backoff parameter value and the second random access resource group not belonging to the first random access resource set.

8. The first node according to any one of Claims 1 to 7, **characterized in that**, "whether the execution time of the action of selecting the second random access resource group depends on the first backoff parameter value is related to the second random access resource group" comprises: the execution time of the action of selecting the second random access resource group not depending on the first backoff parameter value and a first counter reaching a first value; or the execution time of the action of selecting the second random access resource group depending on the first backoff parameter value and a first counter not reaching the first value; the first counter being used to determine the number of sendings of the preamble.

9. The first node according to any one of Claims 1 to 8, **characterized in that**, the node comprises:
the first processor, in response to the first random access process not being completed, determining whether the execution time of a first random access resource selection process is determined depending on the first backoff parameter value according to whether a first condition set is satisfied;
wherein during the first random access resource selection process, the second random access resource group is selected; if the first condition set is satisfied, the execution time of the first random access resource selection process is determined without depending on the first backoff parameter value; if the first condition set is not satisfied, the execution time of the first random access resource selection process is determined depending on the first backoff parameter value.

10. A second node used in wireless communication, **characterized in that**, the node comprises:
a second receiver, during a first random access process, receiving a preamble sent according to a first random access resource group;
a second transmitter, in response to receiving the preamble sent by the first random access resource group, sending a first MAC subPDU, wherein the first MAC subPDU indicates a first backoff parameter value;
the second receiver receiving the preamble sent according to a second random access resource group;
wherein in response to the first random access process not being completed, the second random access resource group is selected; whether the execution time of the selection of the second random access resource group depends on the first backoff parameter value is related to the second random access resource group; the first random access resource group and the second random access resource group are both assigned to 4-step random access.

11. A method used in a first node for wireless communication, **characterized in that**, the method comprises:
during a first random access process, sending a preamble according to a first random access resource group; in response to sending the preamble according to the first random access resource group, receiving a first MAC subPDU, wherein the first MAC subPDU indicates a first backoff parameter value; and in response to the first random access process not being completed, selecting a second random access resource group, and sending the preamble according to the second random access resource group;
wherein whether the execution time of the action of selecting the second random access resource group depends on the first backoff parameter value is related to the second random access resource group; the first random access resource group and the second random access resource group are both assigned to 4-step random access.

12. A method used in a second node for wireless communication, **characterized in that**, the method comprises:
during a first random access process, receiving a preamble sent according to a first random access resource group;
in response to receiving the preamble sent by the first random access resource group, sending a first MAC subPDU, wherein the first MAC subPDU indicates a first backoff parameter value;
receiving the preamble sent according to a second random access resource group;
wherein in response to the first random access process not being completed, the second random access resource group is selected; whether the execution time of the selection of the second random access resource group depends on the first backoff parameter value is related to the second random access resource group; the first random access resource group and the second random access resource group are both assigned to 4-step random access.
